# EUROPEAN PATENT APPLICATION

(11) **EP 4 757 401 A1**
(43) Date of publication of application: **10.06.2026**
(21) Application number: 24853193.1
(22) Date of filing: 26.03.2024
(51) Int. Cl.: H04W 24/10

(54) **PERFORMANCE INDICATION SENDING METHOD, PERFORMANCE INDICATION RECEIVING METHOD, COMMUNICATION DEVICE, AND STORAGE MEDIUM**

(30) Priority: 11.08.2023 CN 202311022044
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); ZHENG, Guozeng, Shenzhen, Guangdong 518057 (CN); LIU, Wenfeng, Shenzhen, Guangdong 518057 (CN); LU, Haitao, Shenzhen, Guangdong 518057 (CN); WANG, Jianwei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/083914
(87) International publication number: WO 2025/035777

(57) **Abstract**

Provided are a performance indication sending method, a performance indication receiving method, a communication device, and a storage medium. The performance indication sending method comprises: acquiring first channel quality information and second channel quality information; acquiring a threshold group, and determining a performance indication on the basis of the threshold group, the first channel quality information, and the second channel quality information; and sending the performance indication.

## Description

The present disclosure claims priority to the Chinese Patent Application No. 202311022044.X, filed on August 11, 2023, the entire content of which is incorporated herein by reference.

### TECHNICAL FIELD

The present disclosure relates to the technical field of communications, and in particular, to performance indication sending and receiving methods, a communication apparatus, and a storage medium.

### BACKGROUND

The multi-antenna technology includes multiple-input-multiple-output (MIMO), multiple transmission node joint transmission (JT), high-frequency beamforming, and the like. The multi-antenna technology is widely used in various radio communication technologies, for example, a long term evolution (LTE) mobile communication network of a 4th generation mobile communication technology (4G), a New Radio (NR) mobile communication network of a 5th generation mobile communication technology (5G), and the like. In a future 6th generation mobile communication technology (6G), the multi-antenna technology is also widely concerned and studied.

### SUMMARY

In an aspect, the present disclosure provides a performance indication sending method. The performance indication sending method includes:
acquiring first channel quality information and second channel quality information;
acquiring a threshold group; determining a performance indication according to the threshold group, the first channel quality information, and the second channel quality information; and
sending the performance indication.

In another aspect, the present disclosure provides a performance indication receiving method. The performance indication receiving method includes:
receiving a performance indication, where the performance indication is determined according to a threshold group, first channel quality information, and second channel quality information.

In yet another aspect, the present disclosure provides a communication apparatus. The communication apparatus includes:
a receiving module, configured to acquire first channel quality information and second channel quality information;
the receiving module, further configured to acquire a threshold group;
a processing module, configured to determine a performance indication according to the threshold group, the first channel quality information, and the second channel quality information; and
a sending module, configured to send the performance indication.

In yet another aspect, the present disclosure provides another communication apparatus, and the communication apparatus includes:
a receiving module, configured to receive a performance indication, where the performance indication is determined according to a threshold group, first channel quality information, and second channel quality information.

In yet another aspect, a communication apparatus is provided. The communication apparatus includes: a processor and a memory; the memory stores instructions executable by the processor; the processor is configured to, upon executing the instructions, enable the communication apparatus to implement the method of any one of the foregoing aspects.

In yet another aspect, a computer-readable storage medium is provided, where the computer-readable storage medium stores computer instructions, and when the computer instructions are executed on a computer, the computer performs the method of any one of the foregoing aspects.

In yet another aspect, a computer program product containing computer instructions is provided, where when the computer instructions are executed on a computer, the computer performs the method of any one of the foregoing aspects.

### BRIEF DESCRIPTION OF THE DRAWINGS

The drawings are used to provide a further understanding of the technical solutions of the present disclosure, constitute a part of the specification, are used together with the embodiments of the present disclosure to explain the technical solutions of the present disclosure, and do not constitute a limitation on the technical solutions of the present disclosure.
FIG. 1 is an architecture schematic diagram of a communication system according to some embodiments of the present disclosure.
FIG. 2 is a flow chart of a performance indication sending method according to some embodiments of the present disclosure.
FIG. 3 is a flow chart of another performance indication receiving method according to some embodiments of the present disclosure.
FIG. 4 is a schematic diagram of components of a communication apparatus according to some embodiments of the present disclosure.
FIG. 5 is a schematic diagram of components of another communication apparatus according to some embodiments of the present disclosure.
FIG. 6 is a structural schematic diagram of a communication apparatus according to some embodiments of the present disclosure.

### DETAILED DESCRIPTION

To enable those skilled in the art to better understand the technical solutions of the embodiments of the present disclosure, the technical solutions in the embodiments of the present disclosure will be clearly and completely described below in conjunction with the drawings in the embodiments of the present disclosure. Obviously, the described embodiments are only some of the embodiments of the present disclosure rather than all of the embodiments. Based on the embodiments in the present disclosure, all other embodiments obtained by those ordinary skilled in the art without creative work belong to the scope of protection in the present disclosure.

In the description of the present disclosure, unless otherwise specified, "/" means "or", for example, A/B may mean A or B. Herein, "and/or" is merely to describe an association relationship of associated objects, indicating that three relationships may exist, for example, A and/or B may indicate: only A, only B, and both A and B. Furthermore, "at least one" refers to one or more, and "multiple/plurality of" refers to two or more. Expressions such as "first" and "second" do not limit the number and execution order, and expressions such as "first" and "second" also do not necessarily limit different items.

It should be noted that, in the present disclosure, words such as "exemplarily" or "for example" are used to represent examples, illustrations, or descriptions. Any embodiment or design solution described with "exemplarily" or "for example" in the present disclosure should not be interpreted as being preferred or advantageous over other embodiments or design solutions. Specifically, the use of words such as "exemplarily" or "for example" is intended to present relevant concepts in a specific manner.

To obtain good communication performance, a communication node needs to acquire accurate channel state information when sending a signal. In a specific implementation, an advanced information processing technology, such as artificial intelligence or other advanced linear and non-linear information processing technologies, may be used, to obtain channel state information. For example, Artificial intelligence-based channel state information estimation, artificial intelligence-based channel prediction, artificial intelligence-based channel state information compression, artificial intelligence-based channel state information decompression, or artificial intelligence-based beam prediction technologies, etc., may be used.

When an advanced technology is used to obtain channel state information, it may happen that a parameter corresponding to an information processing mode used before being changed is no longer applicable to a new usage environment, due to movement of the communication node or the change in the environment or scenario. Here, the parameter corresponding to the information processing mode includes but is not limited to a network parameter or a network architecture of an artificial intelligence model or a function. For example, during relevant information processing such as artificial intelligence-based spatial beam prediction, temporal beam prediction, temporal channel prediction, or spatial channel prediction, the mobility of the device or the change in the channel, for example, shadow fading, blockage, or the change in the environment layout, etc., may lead to the network parameters corresponding to the current Artificial Intelligence no longer being applicable to the current scene. Still using the original information processing mode for information processing at this point will lead to reduced information processing performance. Therefore, how to perform performance monitoring of an information processing mode is a current technical problem to be solved urgently.

The technical solutions provided in the embodiments of the present disclosure may be applied to various mobile communication networks, for example, a new radio (New Radio, NR) mobile communication network using the fifth generation mobile communication technology (5th generation mobile communication technology, 5G), a future mobile communication network (including but not limited to various sixth generation mobile communication technologies, 6G), or multi-communication fusion systems, which are not limited in the embodiments of the present disclosure.

In the embodiments of the present disclosure, a network architecture of a mobile communication network (including but not limited to 3G, 4G, 5G, and future mobile communication networks) may include a network-side device (for example, including but not limited to a base station) and a receiving-side device (for example, including but not limited to a terminal). Moreover, it should be understood that, in this example, in a downlink, a first communication node (which may also be referred to as a first communication node device) may be a base station-side device, and a second communication node (which may also be referred to as a second communication node device) may be a terminal-side device; of course, in an uplink, the first communication node may also be a terminal-side device, and the second communication node may also be a base station-side device. In device-to-device communication between two communication nodes, both the first communication node and the second communication node may be base stations or terminals. The first communication node and the second communication node may be abbreviated as a first node and a second node, respectively.

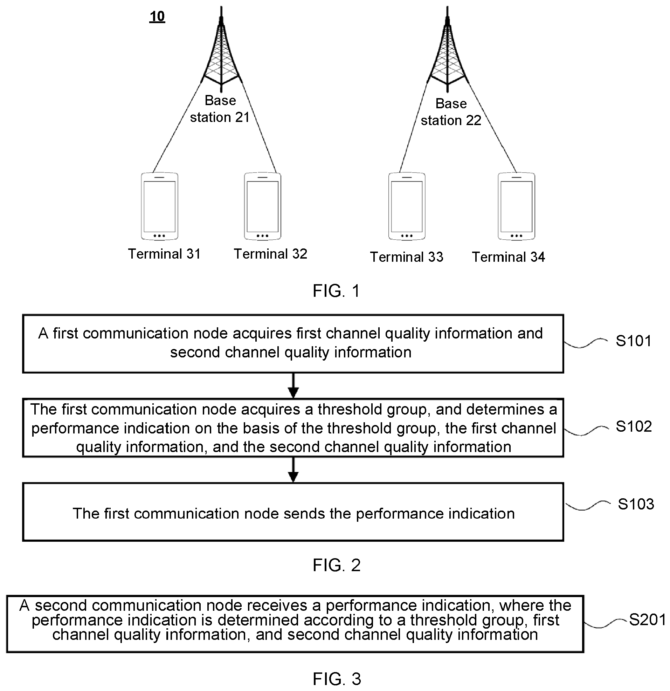

Exemplarily, taking a network-side device as a base station and a receiving-side device as a terminal as an example, FIG. 1 shows an architecture schematic diagram of a communication system provided in the embodiments of the present disclosure. As shown in FIG. 1, a communication system 10 includes multiple base stations (for example, a base station 21 and a base station 22) and multiple terminals (for example, a terminal 31, a terminal 32, a terminal 33, and a terminal 34). The multiple base stations and the multiple terminals may be communicatively connected. A base station may provide network services to terminals in a cell, and simultaneously, may also provide network services to terminals in multiple cells.

In some embodiments, the base station may be a base station in long term evolution (LTE), long term evolution advanced (LTEA), or an evolutional base station (evolutional node B, eNB or eNodeB), a base station device in a 5G network, or a base station in a future communication system; the base station may include various network-side devices such as macro base stations, micro base stations, home base stations, radio remote devices, reconfigurable intelligent surfaces (RISs), routers, wireless fidelity (WIFI) devices, a primary cell, and a secondary cell.

In some embodiments, the terminal may be a device having a wireless transceiver function; it may be deployed on land, including indoor or outdoor, handheld, wearable, or vehicle-mounted; it may also be deployed on water surfaces (for example, on ships, etc.); it may also be deployed in the air (for example, on an airplane, a balloon, and a satellite, etc.). The terminal may be a mobile phone, a tablet computer (Pad), a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, and so on. The embodiments of the present disclosure do not limit the application scenarios. The terminal may sometimes be referred to as a user, user equipment (User Equipment, UE), an access terminal, a UE unit, a UE station, a mobile station, a mobile platform, a remote station, a remote terminal, a mobile device, a UE terminal, a wireless communication device, a UE agent, or a UE apparatus, etc., which is not limited in the embodiments of the present disclosure.

In some embodiments, higher-layer signaling includes but is not limited to radio resource control (RRC), media access control-control element (MAC CE), and other signaling other than physical layer signaling, for example, LTE positioning protocol (LTE Positioning Protocol, LPP) higher-layer signaling, NR positioning protocol A (NR Positioning Protocol A, NRPPa) higher-layer signaling, LTE positioning protocol A (LTE Positioning Protocol A, LPPa) higher-layer signaling, where LPP is also applied in the NR positioning protocol. Physical layer signaling may also be transmitted between a base station and a terminal; for example, physical layer signaling may be transmitted between a base station and a terminal on a physical downlink control channel (PDCCH), or on a physical uplink control channel (PUCCH).

In some embodiments, an indicator of a parameter may also be referred to as an index, or an identifier (ID); the indicator, the identifier, and the index are equivalent concepts. For example, a resource identifier of a wireless system may also be referred to as a resource indicator, or a resource index. The resource index of the wireless system includes but is not limited to one of: an index corresponding to a reference signal resource, a reference signal resource group, a reference signal resource configuration, a channel state information (Channel State Information, CSI) report, a CSI report set, a terminal, a base station, a panel, a neural network, a sub-neural network, a neural network layer, a precoding matrix, a beam, a transmission mode, a sending mode, a reception mode, a module, a model, a functional module, a function, or the like. A base station may indicate an identifier of a resource or a group of resources to a terminal through various higher-layer signaling or physical layer signaling. A terminal may also feed back an identifier of a resource or a group of resources to a base station through higher-layer signaling and/or physical layer signaling.

In some embodiments, a time slot may be a slot or a mini slot. A slot or a mini slot includes at least one symbol. A symbol refers to a time unit in a subframe, a frame, or a slot, for example, it may be an orthogonal frequency division multiplexing (OFDM) symbol, a single-carrier frequency division multiple access (SC-FDMA) symbol, an orthogonal frequency division multiple access (OFDMA) symbol, or the like.

In some embodiments, a transmission includes sending or reception, for example, sending data or a signal, or receiving data or a signal.

In some embodiments, to calculate channel state information or perform channel estimation, mobility management, positioning, or the like, a base station or a terminal needs to send a reference signal (RS). The reference signal includes but is not limited to a channel-state information reference signal (CSI-RS), which includes a zero power CSI-RS (ZP CSI-RS) and a non-zero power CSI-RS (NZP CSI-RS), channel-state information-interference measurement (CSI-IM), a sounding reference signal (SRS), a synchronization signals block (SSB), a physical broadcast channel (PBCH), and a synchronization signals block/physical broadcast channel (SSB/PBCH). The CSI-RS may be used for tracking and therefore, may also be referred to as a tracking reference signal (CSI-RS for Tracking, TRS), where an NZP CSI-RS may be used for measuring a channel or measuring interference. The CSI-IM is generally used for measuring interference, and the SRS is used for measuring an uplink channel. In addition, a resource element (Resource Element, RE) set included in time-frequency resources for transmitting a reference signal is referred to as a reference signal resource, for example, a CSI-RS resource, an SRS resource, a CSI-IM resource, and an SSB resource. Herein, the SSB includes a synchronization signal block and/or a physical broadcast channel.

In some embodiments, a beam includes a transmission beam, a reception beam, a reception and transmission beam pair, and a transmission and reception beam pair. In some embodiments, a beam may be understood as a resource, for example, a reference signal resource, a transmitter spatial filter, a receiver spatial filter, a spatial filter, a spatial receiving parameter, transmitter precoding, receiver precoding, an antenna port, an antenna weight vector, an antenna weight matrix, or the like. A beam index may be replaced with a resource index (for example, a reference signal resource index), because the beam may be bound in the transmission with some resource(s) in at least one of time domain, frequency domain, and code domain. The beam may also be a transmission (sending/reception) mode, where the transmission mode may include spatial division multiplexing, frequency domain/time domain diversity, beamforming, or the like. In addition, the base station may perform a quasi co-location (QCL) configuration for two reference signals and inform the user side to describe a channel feature. A parameter involved in the quasi co-location here at least includes: Doppler spread, Doppler shift, delay spread, average delay, average gain, and a spatial parameter (Spatial Rx parameter, or Spatial parameter). The spatial parameter may include a spatial receiving parameter, angle information, a spatial correlation parameter of a reception beam, an average delay, and a correlation parameter (including phase information) of a time-frequency channel response. The angle information may include at least one of: an angle of arrival and an angle of departure. In a case where angle information includes an azimuth angle and an elevation angle, the angle of arrival includes a zenith angle of arrival (ZOA) and an azimuth angle of arrival (AOA), and the angle of departure includes a zenith angle of departure (ZOD) and an azimuth angle of departure (AOD). Spatial filtering may be at least one of: a discrete Fourier transform (Discrete Fourier Transform, DFT) vector, a precoding vector, a DFT matrix, a precoding matrix, a vector formed by a linear combination of multiple DFTs, or a vector formed by a linear combination of multiple precoding vectors. In some embodiments, a vector and a vector quantity are interchangeable concepts. In some embodiments, a beam pair includes a combination of a transmission beam and a reception beam.

In some embodiments, a beam direction or a beam angle may correspondingly include at least one of: an angle of arrival, an angle of departure, a vector or a vector index constructed by at least one angle of an angle of arrival and an angle of departure, a Discrete Fourier Transform vector, a codeword in a codebook, a transmission beam index, a reception beam index, a transmission beam group index, and a reception beam group index. When the angle information includes an azimuth angle and an elevation angle, the angle of arrival includes a zenith angle of arrival and an azimuth angle of arrival, and the angle of departure includes a zenith angle of departure and an azimuth angle of departure.

In some embodiments, the communication node may select an information processing mode to process obtained information (for example, channel information, channel matrix information, time-domain channel information, frequency-domain channel information, angle information, and position information), to obtain an information processing result (simply referred to as a processing result). The processing result includes one or more of the above-mentioned channel state information, or one or more of beam parameter information, or angle information, position information (for example, a coordinate), and position parameter information.

In some embodiments, an information processing mode may be a traditional information processing mode or various advanced information processing modes, where the advanced information processing mode includes but is not limited to an artificial intelligence (Artificial Intelligence, Al)-based information processing mode. In some examples, an information processing mode is implemented by an artificial intelligence network (also referred to as a neural network, a neural network model, or a model). In some examples, an information processing mode corresponds to an Al model, and in some examples, an information processing mode corresponds to an Al function. In a case where an information processing mode is no longer applicable for the current scenario, an information processing mode applicable for the current scenario may be selected according to channel state information, and the information processing mode applicable for the current scenario may be switched to and activated, or an information processing mode not applicable for the current scenario may be deactivated. In some examples, performance of one or more information processing modes is detected by channel state information.

In some embodiments, artificial intelligence (AI) includes a device, a component, software, a module, a model, a functional module, and a functional function, etc., that have a self-learning capability, with machine learning (Machine learning, ML), deep learning, reinforcement learning, transfer learning, deep reinforcement learning, meta-learning, etc. In some embodiments, artificial intelligence is implemented by an artificial intelligence network (or a neural network), and the neural network includes multiple layers, each layer including at least one node. In an example, a neural network includes an input layer, an output layer, and at least one hidden layer. Each layer of the neural network includes, but is not limited to, at least one of a fully connected layer, a dense layer, a convolutional layer, a transposed convolutional layer, a directly connected layer, an activation function, a normalization layer, and a pooling layer, etc. In some embodiments, each layer of the neural network may include a sub-neural network, such as a residual block (Residual Network block, or Resnet block), a dense network (Densenet Block), or a recurrent network (Recurrent Neural Network, RNN), etc. An artificial intelligence network may be implemented by a model, and the model may include, but is not limited to, a model implemented based on a neural network. A neural network model includes a neural network model structure and/or a neural network model parameter, where the neural network model structure may be referred to as a model structure for short, and the neural network model parameter may be referred to as a network parameter or a model parameter for short. Based on the model structure, a network architecture of the neural network, such as a number of layers, a size of each layer, an activation function, a connection situation, a convolution kernel size and a convolution step size, and a convolution type (for example, 1D convolution, 2D convolution, 3D convolution, dilated convolution, transposed convolution, separable convolution, grouped convolution, or atrous convolution, etc.), may be determined, while the network parameter is a weight value and/or a bias and its value corresponding to each network layer in the neural network model. Furthermore, a model structure may correspond to multiple different sets of neural network model parameter values to adapt to different scenarios. Furthermore, the neural network model parameter may be obtained through online training or offline training, for example, by inputting at least one sample and training the neural network model to obtain the neural network model parameter.

Exemplarily, a sample includes N features and M labels, where N is a positive integer, and M is an integer greater than or equal to 0. Furthermore, multiple samples may constitute a data set. In an example, a sample includes one feature and one label, such as a sample in supervised learning. In another example, a sample has only one feature and no label, such as a sample in unsupervised learning. In yet another example, a sample has multiple features and one label, such as a sample in a multi-input single-output supervised learning network model. In still another example, a sample includes one feature and multiple labels, such as a sample in a single-input multi-output supervised learning network model. In some embodiments, a feature of a sample may be an array, and a label is also an array. The array may be a vector, a matrix, or a tensor greater than two dimensions. Each element in the array may be a discrete value or a real value, for example, a real value from 0 to 1 or a real value from -0.5 to 0.5.

In an example, normalization processing needs to be performed on elements in an array corresponding to a label or a feature, to facilitate faster convergence of the network model. Normalization refers to normalizing a value of an element in an array to a value within an interval greater than or equal to a and less than or equal to b. For example, a = -0.5, b = 0.5. Alternatively, a = 0, b = 1. In an example, an element in an array may be divided by an element with a largest absolute value among elements of this array to achieve normalization. In another example, an element in an array may be divided by a variance of elements of this array to achieve normalization. In an example, an element in an array may be divided by a fixed value (for example, a maximum value among all elements of all samples) to achieve normalization. In yet another example, an element in an array may be divided by a statistical value (for example, a statistical variance of all elements of all samples) to achieve normalization. For an index value, such as a beam index, a CRI, or an SSBRI, normalization may be implemented through one-hot encoding (One-Hot Encoding).

In some embodiments, a model refers to that the data flow from the original input to the output target of a sample passes through multiple linear or nonlinear components. The above model includes a neural network model, a non-artificial intelligence module for processing information or a model corresponding thereto, and a functional component or function that maps (including linear mapping and non-linear mapping) input information to output information. In some embodiments, each model corresponds to a model indicator (Model Indicator, Model ID) or a model identity (Model ID). In some embodiments, a model identity may also have one of the following other equivalent names or concepts: a model index, a first identity, a function identity, or a model indicator, etc.

Exemplarily, a model includes a model structure and model parameters. For example, if the model is a neural network model, the neural network model includes a neural network model structure and neural network model parameters, which are used to describe a structure of the neural network and values of parameters of the neural network, respectively. A neural network model structure may correspond to multiple neural network model parameters, that is, the neural network model structure may be the same, but the corresponding parameter values of the neural network model may be different.

In some examples, a communication node may send a functionality or a functional index to another communication node, to inform the another communication node that it may process information by using an information processing mode corresponding to the functional index. A functionality may also be referred to as a functional module, a functional function, a functional mapping, a functional description, etc., and is used to describe a feature or a type of an information processing mode. The type of the information processing mode may include multiple types, such as an information processing mode for positioning, beam management, CSI prediction, beam prediction, or channel estimation, etc., and the feature of the information processing mode includes, but is not limited to, a scenario description to which the functionality adapts, an input parameter description, an output parameter description, and a type of a measurement parameter included in an output result. A functionality corresponds to one or more information processing modes, each information processing mode may be implemented by one or more models, or a functionality may be implemented by one or more models, or a functionality may be implemented by one or more information processing modes other than a model.

In some embodiments, especially during a high-frequency transmission, because a carrier frequency is relatively high and path loss is large, beamforming is necessary to concentrate energy for propagation in a direction toward the terminal, and thus, beam management is necessary. Beam management includes, but is not limited to, beam scanning, beam tracking, and beam recovery, and a core problem to be solved is how to obtain an accurate beam pair with as low control overhead as possible. Beam scanning includes transmitter beam scanning and/or receiver beam scanning. To reduce overhead of beam scanning, scanning may be performed in two phases. In some embodiments, beam training may include training in a first phase, a second phase, and a third phase. In the first phase, both a transmission beam and a reception beam are scanned simultaneously. In beam scanning in the second phase, one reception beam is fixed and different transmission beams are scanned, and in the third phase, one transmission beam is fixed and different reception beams are scanned. In an example, for example, N_{T} beams are transmitted, with fixed reception and a value of a repetition parameter being off, and then L1-RSRP or L1-SINR corresponding to the N_{T} beams is measured, and beam parameter information corresponding to L beams thereof is selected for reporting. In an example, one beam is sent, with receiving with N_{R} reception beams and the value of the repetition parameter being on, L1-RSRP or L1-SINR corresponding to the N_{R} beams is measured, and beam parameter information corresponding to L beams thereof is selected for reporting; or if no reporting is performed, the terminal retains the beam parameter information corresponding to the L beams, such as information about optimal L reception beam indexes, etc. In a case where both N_{R} and N_{T} are large, reference signal overhead corresponding to beam scanning is very large. Here, N_{R} and N_{T} are positive integers. By using an advanced beam prediction technology, reference signal overhead during beam scanning may be reduced, where the advanced technology may include Al, or other future and existing non-Al technologies for beam prediction. Beam prediction includes spatial beam prediction and temporal beam prediction, or spatial-temporal beam prediction.

In some examples, for spatial beam prediction, an input is a beam parameter information group (a first beam parameter information array), where the first beam parameter information group includes L₀ pieces of beam parameter information, and another beam information group (a second beam parameter information array) is predicted according to the L₀ pieces of beam parameter information, where the second beam information group includes L₁ beam parameter information. L₁ and L₀ are both positive integers. In some examples, L₀ <= L₁. Alternatively, L₀ may also be greater than L₁, in which case the second beam parameter information array includes beam parameter information corresponding to L₁ predicted preferred beams (for example, CRI and/or an SSBRI corresponding to the optimal L₁ beams, L1-RSRP and/or L1-RSRP and/or probability and confidence level corresponding to the L₁ beams, etc., where L₁ may be a positive integer such as 1, 2, 3, or 4). A beam may be a transmission beam, a reception beam, or a transmission and reception beam pair. Each beam may correspond to a beam number direction. In some examples, spatial beam prediction may be implemented by an Al module, for example, by a network model. Beam parameter information corresponding to L₀ beams is combined into a beam parameter information array (a first beam parameter information array) to input to a neural network, the neural network outputs a beam parameter information array (a second beam parameter information array) corresponding to L₁ beams, and indexes corresponding to L pieces of beam parameter information with the largest beam parameter information in the second beam parameter information array are determined as preferred beams. In some examples, the spatial beam prediction may also be implemented in a non-Al mode, for example, linear mapping, non-linear mapping, Wiener filtering, or other modes. In some examples, beams corresponding to the first beam parameter information group and the second beam parameter information group are beams with different types, where the beam types include, for example, a wide beam, a narrow beam, a regular beam, and an irregular beam, etc.

In some examples, in a process of temporal beam prediction, N first beam parameter information groups may be input, and M second beam parameter information groups are predicted according to the N first beam parameter information groups. Each first beam parameter information group includes L₀ pieces of beam parameter information, and each beam parameter information group of the M second beam parameter information groups includes L₁ pieces of beam parameter information, where N, M, L, L₁, and L₀ are all positive integers. Moreover, the beam may be a transmission beam, a reception beam, or a transmission and reception beam pair. In some examples, the number of elements of the N first beam parameter information groups may be different; in some examples, the number of elements of the M second beam parameter information groups may be different. Each beam may correspond to a beam number direction. Here, the N first beam parameter information groups are beam parameter information before a reference slot, and the M second beam parameter information groups are beam parameter information after the reference slot. In some examples, in a case where L₀=L₁, it is temporal beam prediction; in a case where L₀<L₁, it is spatial-temporal beam prediction. In some regression models, L₀ may also be greater than L₁, that is, an output of the model is M beam parameter information groups, in which each beam parameter information group includes beam parameter information corresponding to L₁ preferred beams (for example, CRI and/or SSBRI corresponding to the optimal L₁ beams, L1-RSRP and/or L1-RSRP and/or probability and confidence level corresponding to the L₁ beams, etc., where L₁ may be a positive integer such as 1, 2, 3, or 4). In some examples, temporal beam prediction may be implemented by an Al module, for example, by an. N beam parameter information groups are input, where each beam parameter information group includes L₀ pieces of beam network model parameter information, or the N*L₀ pieces of beam parameter information are combined into a larger beam parameter information array (a first beam parameter information array) to input to the network model, and the network model outputs M second beam parameter information groups, where each second beam parameter information group includes L₁ pieces of beam parameter information, or the M*L₁ pieces of beam parameter information may also be combined into a beam parameter information array (a second beam parameter information array), and for beam parameter information of each group among the M groups of beams, an index corresponding to one or more largest pieces of beam parameter information thereof is determined as a preferred beam of that beam information group. In some examples, the temporal beam prediction may also be implemented in a non-AI mode, such as linear mapping or non-linear mapping mode, etc.

In some embodiments, the reference slot includes one of: a slot agreed upon by a base station and a terminal, or a current slot. The current slot refers to a slot in which CSI is acquired, a slot indicated by the base station, a slot obtained by adding a fixed bias to a slot indicated by the base station, or a slot obtained by adding a fixed bias to a slot in which the terminal receives indication signaling from the base station. Moreover, beam parameter information groups of M slots may be predicted according to beam parameter information groups of the N slots.

In some examples, model parameters of the neural network above may be obtained through online training or offline training of the model. For example, the neural network model may be trained by inputting at least one sample. A sample includes a feature and a label. In some examples, the feature is at least one first beam parameter information array, and the label is at least one second beam parameter information array. Moreover, in a process of training the network, the at least one first beam parameter information array and the at least one second beam parameter information array above have a corresponding relationship, for example, a one-to-one corresponding relationship. The at least one first beam parameter information array may be input to the model to obtain an output result of the model, i.e., at least one predicted second beam parameter information array. Parameters of the neural network model are trained according to the predicted second beam parameter information array and a loss function of the second beam parameter information array corresponding to the label. In a network model deployment or testing phase, at least one first beam parameter information group is input to the network model to output at least one predicted second beam parameter information array. Generally, the predicted number of beams is larger than the number of beams corresponding to the actual input feature, thereby achieving the effect of saving pilot overhead. When monitoring model performance, at least one first beam parameter information array may be input to the model to obtain an output result of the model, i.e., at least one predicted beam parameter information array. By comparing the predicted second beam parameter information array with the second beam parameter information array corresponding to the label, the prediction performance of the network may be known, thereby monitoring whether the performance of the model is good or bad and whether it adapts to the current scenario.

Herein, monitoring the model may also be replaced with concepts such as monitoring of the model, and monitoring the information processing mode may also be replaced with concepts such as monitoring of the information processing mode.

In some examples, a transmission beam index and/or a reception beam index are numbered in an agreed manner to form a beam index. A beam index includes one of: a transmission beam index, a reception beam index, or a transmission and reception beam pair index. A beam index corresponds to a beam direction, or a vector or matrix corresponding to a beam direction. The terminal receives a reference signal (for example, CSI-RS, SSB, etc.) and measures beam parameter information corresponding to each beam, to obtain a beam parameter information array. Generally, a first beam parameter information array is a beam parameter information array formed by beam parameter information corresponding to a first beam set, and a second beam parameter information array is a beam parameter information array formed by beam parameter information corresponding to a second beam set. The first beam set is a subset of the second beam set; of course, a case where the first beam set and the second beam set come from different beam sets is also included, and for example, one comes from a wide beam, and the other comes from a narrow beam.

In some examples, a beam parameter information array is a one-dimensional array, for example, the beam parameter information array is a vector. In some examples, a beam parameter information array is a two-dimensional array, for example, the beam parameter information array is a matrix. In some examples, a beam parameter information array is an array with more than two dimensions, for example, the beam parameter information array is a tensor. A vector and a matrix may also be regarded as special cases of a tensor.

In some examples, to better transmit data or a signal, the base station or the terminal needs to acquire a measurement parameter, where the measurement parameter may include channel state information or other parameters used to characterize a channel, where the channel state information may include at least one of: a channel state information-reference signal resource indicator (CSI-RS Resource Indicator, CRI), a synchronization signal block resource indicator (Synchronization Signals Block Resource Indicator, SSBRI), a layer 1 reference signal received power (L1 Reference Signal Received Power, L1-RSRP or RSRP), a differential RSRP (Differential RSRP), a layer 1 reference signal signal-to-interference noise ratio (L1 Signal-to-Interference Noise Ratio, L1-SINR or SINR), a differential L1-SINR (Differential L1-SINR), a reference signal received quality (Reference Signal Received Quality, RSRQ), L1-RSRQ, a differential RSRQ, a channel quality indicator (Channel Quality Indicator, CQI), a precoding matrix indicator (Precoding Matrix Indicator, PMI), a layer indicator (Layer Indicator, LI), a rank indicator (Rank Indicator, RI), or precoding information. The precoding information includes first-type precoding information, for example, codebook-based precoding information, and the precoding matrix indicator is one type of codebook-based precoding information. The precoding information also includes a non-codebook-based implementation, for example, second-type precoding information. In an example, CSI that includes only first-type precoding information is referred to as first-type CSI; in an example, CSI that includes second-type precoding information is referred to as second-type CSI.

In some examples, the channel information is information for describing a channel environment between communication nodes, obtained according to a reference signal (e.g., CSI-RS), such as a time-domain channel matrix, a frequency-domain channel matrix, or an eigenvector or a matrix composed of eigenvectors of a time-domain or frequency-domain channel. In some examples, the channel information is a complex number matrix, and the size of the channel matrix is related to the number Nt of transmission antennas, the number Nr of reception antennas, and resource elements (Resource Element, RE). For example, there is at least one Nr*Nt channel matrix on one physical resource block (Physical Resource Block).

In some embodiments, the beam parameter information is Layer 1 reference signal received power (L1-RSRP or RSRP) or differential RSRP corresponding to at least one beam. In some embodiments, the beam parameter information is Layer 1 reference signal signal to interference plus noise ratio (L1-SINR or SINR) or differential SINR corresponding to at least one beam. In some embodiments, the beam parameter information is reference signal received quality (RSRQ) corresponding to at least one beam. In some embodiments, the beam parameter information is a probability or a confidence level corresponding to at least one beam; in some embodiments, the beam parameter information is a beam angle (at least one of AOA, ZOA, AOD, ZOD, etc., which are sometimes also referred to as horizontal angle of arrival, vertical angle of arrival, horizontal angle of departure, vertical angle of departure, respectively) corresponding to at least one beam. In some embodiments, the beam parameter information is a transmission beam index corresponding to at least one beam. In some embodiments, the beam parameter information is a reception beam index corresponding to at least one beam. In some embodiments, the beam parameter information is a transmission and reception beam pair index (referred to as beam pair index or beam pair for short) corresponding to at least one beam. In some embodiments, the beam parameter information is a beam domain received power map (Beam Domain Receive Power Map, BDRPM) corresponding to at least one beam. In some embodiments, the beam parameter information is a channel state information-reference signal resource indicator (CSI-RS Resource Indicator, CRI) corresponding to at least one beam. In some embodiments, the beam parameter information is a synchronization signal block resource indicator (Synchronization Signals Block Resource Indicator, SSBRI) corresponding to at least one beam, or other reference signal resource indicators, such as SRSRI (Sounding Reference Signal Resource Indicator). In some embodiments, the beam parameter information is a combination of at least two of the following beam parameter information corresponding to at least one beam: RSRP, differential RSRP, RSRQ, differential RSRQ, SINR, differential SINR, beam angle, transmission beam index, reception beam index, beam pair index, CRI, SSBRI, etc. In some embodiments, the beam parameter information is a linear value of one of RSRP, differential RSRP, RSRQ, differential RSRQ, SINR, or differential SINR. In some embodiments, the beam parameter information is a logarithmic value or a decibel value (dB) of one of RSRP, differential RSRP, RSRQ, differential RSRQ, SINR, or differential SINR.

In some embodiments, the beam parameter information may be obtained based on CSI-RS measurement. In some embodiments, the beam parameter information is obtained based on SSB measurement. In some embodiments, the beam parameter information is obtained based on SRS measurement.

In some examples, the beam parameter information is a subset of channel state information, that is, the beam parameter information belongs to the channel state information. The channel state information, in turn, belongs to a measurement parameter. In some examples, the measurement parameter, the channel state information, and the beam parameter information all belong to a measurement result, a processing result, or a generated result.

In some examples, to transmit the measurement result at the physical layer, for example, transmit channel state information, the terminal and the base station define a report (e.g., a CSI report or a CSI report configuration (config)), where the report defines at least one of the following parameters: a time-frequency resource for transmitting CSI, a report quality (report Quantity), a time-domain type of the report (report Config Type), a channel measurement resource, an interference measurement resource, a measurement bandwidth size, and other information. Moreover, the report may be transmitted on an uplink transmission resource, where the uplink transmission resource includes PUSCH and PUCCH, and the time-domain type of the report may include any one of: a periodic report (e.g., periodic CSI report, P-CSI), an aperiodic report (e.g., aperiodic CSI report, AP-CSI), a semi-persistent report (e.g., semi-persistent CSI report, SP-CSI). Exemplarily, the number of bits transmitted for P-CSI is relatively small and it is usually transmitted on PUCCH, the number of bits transmitted for A-CSI is larger and it is usually transmitted on PUSCH, while SP-CSI may be transmitted based on PUSCH or may be transmitted based on PUCCH. P-CSI transmitted based on PUCCH is generally configured via higher-layer signaling (Radio Resource Control, RRC), SP-CSI transmitted based on PUCCH is also configured, activated, or deactivated via higher-layer signaling (RRC and/or MAC CE), while SP-CSI transmitted based on PUSCH is activated or deactivated via physical layer signaling (Downlink control information, DCI). A-CSI is triggered by DCI. The DCI is generally transmitted on a physical downlink control channel (PDCCH).

In some embodiments, the base station configures, for the terminal via higher-layer signaling and/or physical layer signaling, N_{C} reports (e.g., CSI reports) that need to be fed back to the base station, where each report has an identity (ID), which may be referred to as a report ID. The terminal may select M_{C} reports from the N_{C} reports according to its own computational capability or processing capability, as well as a requirement of the base station, and feed back at least one report among the M_{C} reports according to an uplink feedback resource, where N_{C} and M_{C} are positive integers, and M_{C}<=N_{C}. In some embodiments, feedback resources for at least two reports of the M_{C} reports to be fed back conflict, for example, at least one symbol and/or at least one subcarrier in transmission resources (e.g., PUCCH or PUSCH) corresponding to at least two reports of the M_{C} reports to be fed back are the same. Furthermore, feeding back CSI may also be referred to as transmitting CSI or sending CSI, for example, channel state information is carried on an uplink transmission resource for feedback or transmission, and both the uplink transmission resource and the corresponding CSI may be indicated by a channel state information report. It should be noted that feeding back or transmitting (e.g., sending or receiving) a report refers to transmitting the content that needs to be transmitted, indicated in the report, including but not limited to channel state information or other possible information.

As shown in FIG. 2, the present disclosure provides a performance indication sending method, and the method includes S101 to S103.

S101: the first communication node acquires first channel quality information and second channel quality information.

In some embodiments, the first channel quality information may be channel quality information obtained by the first communication node performing preliminary beam prediction based on a current beam prediction parameter. For example, in a case where the first communication node performs beam prediction, a prediction result output by a beam prediction model in the first communication node may be understood as the aforementioned first channel quality information.

In some embodiments, a type of the first channel quality information includes at least one of: one resource indicator, K resource indicators, one channel quality parameter, K channel quality parameters, a confidence level, a probability, a link performance parameter, or a data drift value, where K is an integer greater than 1.

Exemplarily, the resource indicator may be a CRI, an SSBRI, or other possible parameters. The CRI may be used to indicate a beam index, or a resource index corresponding to a beam, or an index of a transmission mode, etc., or directly refer to a beam direction or angle information of a beam. The channel quality parameter may be RSRQ, L1-RSRP, differential RSRQ, L1-SINR, L1-SINR, or other possible parameters. The confidence level or probability is a parameter used to evaluate a beam prediction result.

In some embodiments, the second channel quality information may be an actual measurement parameter of channel quality acquired by the first communication node. In some embodiments, a type of the second channel quality information may include at least one of: one resource indicator, K resource indicators, one channel quality parameter, K channel quality parameters.

It should be noted that the first channel quality parameter is a predicted (second) channel quality parameter output by inference of a beam prediction model, and the acquired second channel quality parameter is a channel quality parameter value that is actually measured. In this case, the first channel quality parameter may be understood as an output result obtained by the model based on a sample or an instance, and the second channel quality parameter may be understood as a label of the sample, where the label may be used to verify the output result of the sample. Therefore, the beam prediction result output by the beam prediction model (i.e., the first channel quality information) may be verified based on the second channel quality information, to determine whether the beam prediction model is applicable to a current beam prediction environment, i.e., so as to detect current beam prediction performance.

In some embodiments, to determine whether a spatial beam prediction model is adapted to the current application scenario or channel environment, the second communication node may send a reference signal resource to the first communication node periodically, or semi-persistently, or aperiodically for multiple times, to monitor the validity of the spatial beam prediction model in the first communication node.

In some embodiments, the first communication node as a terminal and the second communication node as a base station are taken as an example. In a case of performing spatial beam prediction, the second communication node may send a reference signal resource in a first reference signal resource set to the first communication node in a slot (for example, a first slot). Correspondingly, the first communication node may receive and measure the reference signal resource in the first reference signal resource set, to obtain first beam parameter information.

Furthermore, spatial beam prediction is performed at the first communication node side, and the first communication node may input all or some parameters in the first beam parameter information into a spatial beam prediction model and obtain a beam prediction result output by the spatial beam prediction model, i.e., first channel quality information. Alternatively, in some embodiments, the first communication node may also perform preprocessing on the first beam parameter information, and then input all or some preprocessed parameters into the spatial beam prediction model, to obtain predicted first channel quality information.

In some embodiments, the first communication node may also send a reference signal resource in a second reference signal resource set to the first communication node in another slot (for example, a second slot). Correspondingly, the first communication node may receive and measure the reference signal resource in the second reference signal resource to obtain second beam parameter information. Furthermore, the first communication node may determine second channel quality information based on the second beam parameter information.

In some examples, for simplifying the description, L1-RSRP may be replaced by differential RSRP, differential L1-RSRP, RSRP, etc.; L1-SINR may be replaced by differential SINR, differential L1-SINR, SINR, etc.; L1-RSRQ may be replaced by differential RSRQ, differential L1-RSRQ, RSRQ, etc.

Exemplarily, the above first reference signal resource set may include L₁ CSI-RS resources and/or SSB resources, so that the first communication node may receive and measure L₁ CSI-RS resources and/or SSB resources, to obtain L₁ pieces of first beam parameter information, where L1 is a positive integer. For example, the L₁ pieces of first beam parameter information may include one of the following parameters: L1-RSRP, L1-RSRP, L1-RSRQ, CRI, SSBRI. Furthermore, the first communication node may input the L₁ pieces of beam parameter information into the spatial beam prediction model to obtain first channel quality information, for example, predicted K parameters of at least one of: L1-RSRP, L1-RSRP, L1-RSRQ, probability, CRI, SSB; additionally, the first channel quality information may also be referred to as predicted second channel quality information.

Moreover, the second reference signal resource set may include L2 CSI-RS resources and/or SSB resources. Furthermore, the first communication node may receive and measure L2 CSI-RS resources and/or SSB resources to obtain L2 pieces of second beam parameter information, i.e., L2 second channel quality parameters, where L2 is a positive integer. For example, the L2 second channel quality parameters may include one of the following parameters: L1-RSRP, L1-RSRP, L1-RSRQ, CRI, SSBRI.

In some embodiments, a value of K in the first channel quality information may be equal to a value of L2 corresponding to the first beam parameter information, i.e., the beam prediction result (first channel quality information) includes beam parameter information of all beams corresponding to the second reference signal resource set. Alternatively, the value of K may be less than or the value of L2, for example, L2 is 5, and the value of K may be 1, 2, 3, or 4. In this case, the beam prediction result (first channel quality information) may only include beam parameter information of some beams corresponding to the second reference signal resource set, exemplarily, the some beams are K beams with better prediction quality.

In some embodiments, the above second reference signal resource set may be a subset of the first reference signal resource set. Thus, the second communication node may only send the first reference signal resource set, and the above first slot and second slot are the same slot. In addition, the second reference signal may also distinguish a beam corresponding to the first reference signal resource set and a beam corresponding to the second reference signal resource set by sending an identifier of each reference signal resource set or by mapping. For example, the first reference signal resource set has a mapping relationship with its corresponding beam, and the second reference signal resource set has a mapping relationship with its corresponding beam.

In some embodiments, the above second reference signal resource set may be different from the first reference signal resource set. Thus, the above first slot and second slot may be different slots, or the above first slot and second slot may also be the same slot.

In some embodiments, the second reference signal resource set corresponds to a different type of beam from the first reference signal resource set, for example, a beam corresponding to the second reference signal resource set is a wide beam, while a beam corresponding to the first reference signal resource set is a narrow beam.

In some embodiments, in a case of performing temporal beam prediction, the second communication node may send reference signal resources in the first reference signal resource set to the first communication node in N slots respectively, where N is a positive integer. Correspondingly, the first communication node may receive and measure the reference signal resources in the N first reference signal resource sets to obtain first beam parameter information.

Furthermore, spatial beam prediction is performed at the first communication node side, and the first communication node may input all or some parameters in the first beam parameter information into a spatial beam prediction model and obtain a beam prediction result output by the spatial beam prediction model, i.e., first channel quality information. Alternatively, in some embodiments, the first communication node may further perform preprocessing on the first beam parameter information, and then input all or some of the preprocessed parameters into the spatial beam prediction model to obtain predicted first channel quality information.

In some embodiments, the first communication node may further send reference signal resources in the second reference signal resource set to the second communication node in M slots respectively, where M is a positive integer. Correspondingly, the first communication node may receive and measure the reference signal resources in the M second reference signal resource sets to obtain second beam parameter information.

Exemplarily, the first reference signal resource set may include L₁ CSI-RS resources and/or SSB resources. Thus, the first communication node may receive and measure L1*N CSI-RS resources and/or SSB resources to obtain L1*N pieces of first beam parameter information. For example, in each slot, it includes L₁ number of one of the following parameters: L1-RSRP, L1-RSRP, L1-RSRQ, CRI, SSBRI, etc.; in some embodiments, L₁ pieces of beam parameter information in each slot of the N slots may constitute a beam parameter information group, referred to as a first beam parameter information group.

Furthermore, the first communication node may obtain predicted M slots, based on the L1*N pieces of first beam parameter information and the spatial beam prediction model, where each slot includes K pieces of channel quality information. For example, in each slot, it includes K number of at least one of the following parameters: L1-RSRP, L1-RSRP, L1-RSRQ, probability, CRI, SSB; sometimes, K pieces of channel quality information of each slot of the M slots constitute a channel quality information group, referred to as a predicted second channel quality information group.

In addition, the second reference signal resource set may include L2 CSI-RS resources and/or SSB resources. Thus, the first communication node may receive and measure L2*M CSI-RS resources and/or SSB resources, to obtain L2*M pieces of second beam parameter information, i.e., L2*M second channel quality parameters, where L2 is a positive integer.

In some embodiments, a value of K in the first channel quality information may be equal to a value of L2 corresponding to the first beam parameter information, i.e., the beam prediction result (first channel quality information) includes beam parameter information of all beams corresponding to the second reference signal resource set. Alternatively, the value of K may be less than or the value of L2, for example, L2 is 5, and the value of K may be 1, 2, 3, or 4. In this case, the beam prediction result (first channel quality information) may only include beam parameter information of some beams corresponding to the second reference signal resource set, exemplarily, the some beams are K beams with better prediction quality.

In some embodiments, the above M slots may be continuous slots, non-continuous slots, or equally spaced M slots. Similarly, the above N slots may be continuous slots or non-continuous slots, or equally spaced N slots.

In some embodiments, a beam set corresponding to the first reference signal resource set is the same as a beam set corresponding to the second reference signal resource set. Alternatively, a number of beams corresponding to the first reference signal resource set is the same as a number of beams corresponding to the first reference signal resource set.

In some embodiments, the above second reference signal resource set may be a subset of the first reference signal resource set. Thus, the second reference signal may also distinguish beams corresponding to the first reference signal resource set and beams corresponding to the second reference signal resource set by sending an identifier of each reference signal resource set or by mapping. For example, the first reference signal resource set has a mapping relationship with its corresponding beam, and the second reference signal resource set has a mapping relationship with its corresponding beam.

In some embodiments, the second reference signal resource set corresponds to a different type of beams from the first reference signal resource set, for example, a beam corresponding to the second reference signal resource set is a wide beam, while a beam corresponding to the first reference signal resource set is a narrow beam.

In some embodiments, in a case of performing model monitoring based on system performance or drift of input data, the second communication node may not need to send reference signal resources in the second reference signal resource set. Alternatively, in a case of performing model monitoring based on system performance or drift of output data, the second communication node may not need to send reference signal resources in the first reference signal resource set.

S102: the first communication node acquires a threshold group, and determines a performance indication according to the threshold group, the first channel quality information, and the second channel quality information.

In some embodiments, the threshold group includes at least one threshold, and the threshold may be determined based on the first channel quality information and/or the second channel quality information.

In some embodiments, the second communication node may send the threshold group to the first communication node. Alternatively, the first communication node may set the threshold by itself. Thus, the first communication node may acquire the threshold group, and furthermore determine the performance indication based on the threshold group, the first channel quality information, and the second channel quality information.

In some embodiments, the performance indication is used to indicate performance of an information processing mode, such as beam prediction performance. Exemplarily, the performance indication may be a model monitoring metric determined based on a sample or an instance (or referred to as a model monitoring metric, or a model performance metric, or a model validity metric).

In some embodiments, the performance indication may include two values, for example, a first performance indication may include a first value and a second value.

The first value and the second value are different values, exemplarily, the first value may be used to indicate that the information processing mode is valid, such as the model monitoring result is valid, or the model is applicable to a current usage scenario, and the second value may be used to indicate that the information processing mode is invalid, such as the model monitoring result is invalid, or the model is not applicable to the current scenario. Alternatively, the second value may also be used to indicate that the model monitoring result is valid, and in this case, the first value may be used to indicate that the model monitoring result is invalid. For ease of description, the following describes the embodiments in the present disclosure by taking an example where the first value is used to indicate that the model monitoring result is valid and the second value is used to indicate that the model monitoring result is invalid.

Exemplarily, the first value is True, and the second value is False. Alternatively, the first value is a real number greater than 0, and the second value is 0 or a negative number. Alternatively, the first value is enable (Enable), and the second value is disable (Disable). Alternatively, the first value is another value indicating that model monitoring is valid, and the second value is another value indicating that model monitoring is invalid.

In some examples, the performance indication may be a continuous positive real number, such as a number from 0 to 1. In a case where the performance indication is greater than a preset threshold S0, it indicates that the information processing mode is valid, such as the model monitoring result is valid; otherwise, the information processing mode is invalid, such as the model monitoring result is invalid. Without a specific description, if the performance indication is a continuous value, the performance indication being greater than the preset threshold SO is equivalent to or replaceable with the performance indication being the first value of discrete values, and the performance indication being less than the preset threshold S0 is equivalent to or replaceable with the performance indication being the second value of discrete values. The threshold SO is set as needed, and it is a positive real number.

In some examples, the information processing mode (model monitoring) being valid may also be said that performance of the information processing mode (model monitoring) meets a requirement, or is excellent, and the information processing mode (model monitoring) being invalid may also be said that performance of the information processing mode (model monitoring) does not meet a requirement, or is poor.

For ease of description, a difference between two variables A and B is represented as A minus B, or a larger value among A and B minus a smaller value among A and B minus, or an absolute value of a result of A minus B. Here, A may be a kind of channel state information in the first channel state information, such as the value of one of parameters: L1-RSRP, L1-SINR, L1-RSRQ, CRI, SSBRI, SRSRId, etc. B may be a kind of channel state information in the second channel state information, such as the value of one of parameters: L1-RSRP, L1-SINR, L1-RSRQ, CRI, SSBRI, SRSRID, etc.

In a case of performing spatial beam prediction, for performance monitoring of a single sample, the performance indication that needs to be determined includes a first performance indication, and there are at least the following possible scenes where the first communication node determines the first performance indication.

The first performance indication here may be used to indicate beam prediction performance corresponding to the first channel quality information. In some embodiments, the first performance indication may include two values, for example, a first value and a second value.

Scene 1: the first channel quality information includes one first resource indicator, the second channel quality information includes L second resource indicators, and the threshold includes a first threshold.

L is a positive integer.

In some embodiments, the one first resource indicator included in the first channel quality information may be a resource indicator corresponding to one best beam output by a spatial beam prediction model.

In some embodiments, the first communication node determines the first performance indication according to a number of second resource indicators that are the same as the first resource indicator among the L second resource indicators.

In some embodiments, if the number of second resource indicators that are the same as the first resource indicator among the L second resource indicators is greater than or equal to the first threshold, the first performance indication is the first value. Alternatively, if the number of second resource indicators that are the same as the first resource indicator among the L second resource indicators is less than the first threshold, the first performance indication is the second value.

In some embodiments, a value of L may be 1. In a case where the value of L is 1, the second channel quality information includes a second resource indicator corresponding to an optimal beam, and furthermore, the second resource indicator may be compared with the first resource indicator to determine whether they are equal. In a case where the second resource indicator is equal to the first resource indicator, the first performance indication is the first value. Alternatively, in a case where the second resource indicator is not equal to the first resource indicator, the first performance indication is the second value.

In some embodiments, a value of the first threshold may be 1.

Exemplarily, taking an example where the first threshold has a value of 1, the first resource indicator is CRIO, and the second resource indicator is CRI, the first communication node may acquire a first beam parameter set, and use the first beam parameter set as an input of a spatial beam prediction model. Moreover, an output of the model is only CRIO, which can be understood as expecting the model to predict an optimal beam. Furthermore, the first communication node may also acquire a second beam parameter set, including a group of L1-RSRP (or a group of L1-SINR, L1-RSRQ, or other parameters), and furthermore, may compare L1-RSRP, to find reference signal resource indexes CRIs corresponding to L L1-RSRP with largest parameter values, i.e., L second resource indicators in the second channel quality information.

In this case, the first communication node may compare the first channel quality information CRIO output by the model with the L CRIs, and if CRIO is in the L CRIs, i.e., the number of second resource indicators that are equal to the first resource indicator among the L second resource indicators is 1, which is equal to the first threshold value 1, the first communication node may determine that the spatial beam prediction model is valid for the current sample or instance, that is, the first performance indication is the first value. Otherwise, if CRIO is not in the L CRIs, that is, the number of second resource indicators that are equal to the first resource indicator among the L second resource indicators is 0, which is less than the first threshold value 1, the first communication node may determine that the spatial beam prediction model is invalid for the current sample or instance, that is, the first performance indication is the second value.

In some embodiments, the first resource indicator may also be an SSBRI, an SRSRI, or a beam index. The second resource indicator may also be an SSBRI, an SRSRI, or a beam index. Here, L1-RSRP may also be determined by using other beam parameter information: RSRP, differential RSRP, RSRQ, differential RSRQ, SINR, differential SINR. In the subsequent embodiments or examples, L1-RSRP is used as the descriptive example, and it may be replaced with other beam parameter information: RSRP, differential RSRP, RSRQ, differential RSRQ, SINR, differential SINR. No further individual explanation will be provided.

In some embodiments, a maximum value of L is determined according to received signaling, where the signaling includes higher-layer signaling and/or physical layer signaling.

In some embodiments, the first communication node determines the first performance indication according to differences between the first resource indicator and the L second resource indicators.

In some embodiments, if at least one difference among the differences between the first resource indicator and the L second resource indicators is less than or equal to the first threshold, the first performance indication is the first value. Alternatively, if all differences between the first resource indicator and the L second resource indicators are greater than the first threshold, the first performance indication is the second value.

In some embodiments, the value of the first threshold may be a preset resource indication difference threshold.

Exemplarily, taking the first threshold as CRI_diff, the first resource indicator as CRIO, and the second resource indicator as CRI as an example, the first communication node may acquire a first beam parameter set and use the first beam parameter set as an input to the spatial beam prediction model. Moreover, an output of the model is only a CRIO, which can be understood as expecting the model to predict an optimal beam. Furthermore, the first communication node may also acquire a second beam parameter set, including a group of L1-RSRP (or a group of parameters such as L1-SINR, L1-RSRQ, etc.), and furthermore, may compare values of L1-RSRP, to find reference signal resource indexes CRIs corresponding to L L1-RSRP with largest parameter values, i.e., the L second resource indicators in the second channel quality information.

In this case, the first communication node may determine a difference between the first channel quality information CRIO and each CRI of the L CRIs, and if at least one difference among the L differences is less than or equal to the first threshold CRI_diff, the first performance indication is the first value. Alternatively, if all the L differences are greater than the first threshold CRI_diff, the first performance indication is the second value.

In some embodiments, the first resource indicator may also be an SSBRI, an SRSRI, or a beam index. The second resource indicator may also be an SSBRI, an SRSRI, or a beam index.

In some embodiments, a maximum value of L is determined according to received signaling, and the signaling includes higher-layer signaling and/or physical layer signaling.

Scene 2: the first channel quality information includes L first resource indicators, the second channel quality information includes one second resource indicator, and the threshold group includes a second threshold.

L is a positive integer.

In some embodiments, the one second resource indicator included in the second channel quality information may be a resource indicator corresponding to one optimal beam obtained by actual measurement.

In some embodiments, the first communication node determines the first performance indication according to the number of first resource indicators that are equal to the second resource indicator among the L first resource indicators.

In some embodiments, if the number of first resource indicators that are equal to the second resource indicator among the L first resource indicators is greater than or equal to the second threshold, the first performance indication is the first value. Alternatively, if the number of first resource indicators that are the same as the second resource indicator among the L first resource indicators is less than the second threshold, the first performance indication is the second value.

In some embodiments, the value of L may be 1. In a case where the value of L is 1, the one first resource indicator included in the first channel quality information may be a resource indicator corresponding to one optimal beam output by the spatial beam prediction model. Furthermore, the first resource indicator may be compared with the second resource indicator to determine whether they are equal. If the first resource indicator and the second resource indicator are equal, the first performance indication is the first value. Alternatively, if the first resource indicator and the second resource indicator are not equal, the first performance indication is the second value.

Exemplarily, taking the second threshold value as 1, the first resource indicator as CRIO, and the second resource indicator as CRI as an example, the first communication node may acquire a first beam parameter set and use the first beam parameter set as an input to the spatial beam prediction model. Furthermore, the output of the model is L CRIOs, which may be understood as expecting the model to predict L optimal beams. Moreover, the first communication node may also acquire a second beam parameter set, which includes a group of L1-RSRP (or a group of parameters such as L1-SINR, L1-RSRQ, etc.), and then may compare values of L1-RSRP to find a reference signal resource index (CRI) corresponding to one L1-RSRP with the largest parameter value, i.e., one second resource indicator in the second channel quality information.

In this case, the first communication node may compare the L CRIOs of the first channel quality information output by the model with the second channel quality information CRI, if CRI is in the L CRIOs, that is, the number of first resource indicators that are equal to the second resource indicator among the L first resource indicators is 1, which is equal to the second threshold value 1, the first communication node may determine that the spatial beam prediction model is valid for the current sample or instance, that is, the first performance indication is the first value. Otherwise, if CRI is not in the L CRIOs, that is, the number of first resource indicators that are equal to the second resource indicator among the L first resource indicators is 0, which is less than the second threshold value 1, the first communication node may determine that the spatial beam prediction model is invalid for the current sample or instance, that is, the first performance indication is the second value.

In some embodiments, the first resource indicator may also be an SSBRI, an SRSRI, or a beam index. The second resource indicator may also be an SSBRI, an SRSRI, or a beam index.

In some embodiments, a maximum value of L is determined according to received signaling, and the signaling includes higher-layer signaling and/or physical layer signaling.

In some embodiments, the first communication node determines the first performance indication according to differences between the second resource indicator and the L first resource indicators.

In some embodiments, if at least one difference among the differences between the second resource indicator and the L first resource indicators is less than or equal to the second threshold, the first performance indication is the first value. Alternatively, if all differences between the second resource indicator and the L first resource indicators are greater than the second threshold, the first performance indication is the second value.

Exemplarily, taking the second threshold value as CRI_diff, the first resource indicator as CRIO, and the second resource indicator as CRI as an example, the first communication node may acquire a first beam parameter set and use the first beam parameter set as an input to the spatial beam prediction model. Furthermore, the output of the model is L CRIOs, which can be understood as expecting the model to predict L optimal beams. Moreover, the first communication node may also acquire a second beam parameter set, which includes a group of L1-RSRP (or a group of parameters such as L1-SINR, L1-RSRQ, etc.), and then may compare values of L1-RSRP to find a reference signal resource index (CRI) corresponding to one L1-RSRP with the largest parameter value, i.e., one second resource indicator in the second channel quality information.

In this case, the first communication node may determine differences between the second channel quality information CRI and each CRIO of the L first channel quality information CRIOs, and if at least one difference among the L differences is less than or equal to the second threshold CRI_diff, the first performance indication is the first value. Alternatively, if all L differences are greater than the first threshold CRI_diff, the first performance indication is the second value.

In some embodiments, the first resource indicator may also be an SSBRI, an SRSRI, or a beam index. The second resource indicator may also be an SSBRI, an SRSRI, or a beam index.

In some embodiments, a maximum value of L is determined according to received signaling, and the signaling includes higher-layer signaling and/or physical layer signaling.

In some embodiments, the first channel quality information includes L first resource indicators, the second channel quality information includes L second resource indicators, and the threshold group includes a second threshold.

In some embodiments, the first communication node determines the first performance indication according to the number of resource indicators that are equal to the L first resource indicators among the L first resource indicators.

In some embodiments, if the number of resource indicators that are equal to the L second resource indicators among the L first resource indicators is greater than or equal to the second threshold, the first performance indication is the first value. Alternatively, if the number of resource indicators that are equal to the L second resource indicators among the L first resource indicators is less than the second threshold, the first performance indication is the second value.

In some embodiments, the first communication node determines the first performance indication according to differences between the L second resource indicators and each of the L first resource indicators.

In some embodiments, if at least one difference among differences between the L second resource indicators and the L first resource indicators is less than or equal to the second threshold, the first performance indication is the first value. Alternatively, if all differences between the L second resource indicators and the L first resource indicators are greater than the second threshold, the first performance indication is the second value.

Scene 3: the first channel quality information includes L first channel quality parameters, the second channel quality information includes 1 second channel quality parameter, and the threshold group includes a third threshold.

In some embodiments, the first communication node determines the first performance indication based on an average value of differences between the L first channel quality parameters and the second channel quality parameter.

In some embodiments, if the average value of the differences between the L first channel quality parameters and the second channel quality parameter is less than the third threshold, the first performance indication is the first value. Alternatively, if the average value of the differences between the L first channel quality parameters and the second channel quality parameter is greater than or equal to the third threshold, the first performance indication is the second value.

In some embodiments, the one second channel quality parameter included in the second channel quality information may be a channel quality parameter corresponding to one optimal beam obtained by actual measurement.

In some embodiments, the value of L may be 1. In a case where the value of L is 1, one first channel quality parameter included in the first channel quality information may be a channel quality parameter corresponding to one optimal beam output by the spatial beam prediction model.

In some embodiments, the value of the third threshold may be a preset RSRP value, for example, RSRP_TH1, which may be a real number greater than 0, for example, 1 dB (db) or other values. Furthermore, the second communication node may transmit the third threshold to the first communication node via higher-layer and/or physical layer signaling.

Exemplarily, taking the third threshold value as RSRP_TH1, the first channel quality parameter as L1-RSRP, and the second channel quality parameter as L1-RSRP as an example, the first communication node may acquire a first beam parameter set and use the first beam parameter set as an input to the spatial beam prediction model. An output of the model includes L predicted L1-RSRPO, which may be understood as expecting the model to predict L optimal beams. Alternatively, the model outputs predicted L₀ L1-RSRP, and the first communication node selects L1-RSRPO corresponding to L optimal beams from the L₀ L1-RSRP. Additionally, the first communication node may also acquire a second beam parameter set, including a group of L1-RSRP (or a group of parameters such as L1-SINR, L1-RSRQ, etc.). Furthermore, it may compare values of L1-RSRP, to find L1-RSRP with the maximum parameter value, which may be denoted as L1-RSRP1.

In this case, the first communication node may determine L differences L1-RSRP_diff between the L first channel quality parameters L1-RSRP0 and the second channel quality parameter L1-RSRPO, calculate an average value of the L L1-RSRP_diff, and if the average value is less than the third threshold RSRP_TH1, the first performance indication is the first value. Alternatively, if the average value is greater than or equal to the third threshold RSRP_TH1, the first performance indication is the second value.

In some embodiments, the first channel quality parameter may also be L1-SINR or L1-RSRQ. The second channel quality parameter may also be L1-SINR or L1-RSRQ.

In some embodiments, a maximum value of L is determined according to received signaling, and the signaling includes higher-layer signaling and/or physical layer signaling.

In some embodiments, the first communication node determines the first performance indication based on a difference between a weighted average of the L first channel quality parameters and the second channel quality parameter.

In some embodiments, if the difference between the weighted average of the L first channel quality parameters and the second channel quality parameter is less than the third threshold, the first performance indication is the first value. Alternatively, if the difference between the weighted average of the L first channel quality parameters and the second channel quality parameter is greater than or equal to the third threshold, the first performance indication is the second value.

In some embodiments, the value of the third threshold may be a preset RSRP value, for example, RSRP_TH0, which may be a real number greater than 0, for example, 1 dB or other values. Furthermore, the second communication node may transmit the third threshold to the first communication node via higher-layer and/or physical layer signaling.

Exemplarily, taking the third threshold value as RSRP_TH01, the first channel quality parameter as L1-RSRP, and the second channel quality parameter as L1-RSRP as an example, the first communication node may acquire a first beam parameter set and use the first beam parameter set as an input to the spatial beam prediction model. An output of the model includes L predicted L1-RSRPO, which may be understood as expecting the model to predict L optimal beams. Alternatively, the model outputs predicted L₀ L1-RSRP, and the first communication node selects L1-RSRPO corresponding to L optimal beams from the L₀ L1-RSRP. Additionally, the first communication node may also acquire a second beam parameter set, including a group of L1-RSRP (or a group of parameters such as L1-SINR, L1-RSRQ, etc.). Furthermore, it may compare values of L1-RSRP, to find L1-RSRP with the maximum parameter value, which may be denoted as L1-RSRP1.

In this case, the first communication node may assign different weights to the L first channel quality parameters L1-RSRP0 and determine a weighted average of the L first channel quality parameters L1-RSRPO. If a difference between the weighted average and L1-RSRP1 is less than the third threshold RSRP_TH0, the first performance indication is the first value. Alternatively, if a difference between the weighted average of the L first channel quality parameters L1-RSRP0 and the second channel quality parameter L1-RSRP1 is greater than or equal to the third threshold RSRP_TH0, the first performance indication is the second value.

In some embodiments, the first channel quality parameter may also be L1-SINR or L1-RSRQ. The second channel quality parameter may also be L1-SINR or L1-RSRQ.

In some embodiments, a maximum value of L is determined according to received signaling, and the signaling includes higher-layer signaling and/or physical layer signaling.

In some embodiments, the first communication node determines the first performance indication based on a difference between a maximum value among the L first channel quality parameters and the second channel quality parameter.

In some embodiments, if the difference between the maximum value among the L first channel quality parameters and the second channel quality parameter is less than the third threshold, the first performance indication is the first value. Alternatively, if the difference between the maximum value among the L first channel quality parameters and the second channel quality parameter is greater than or equal to the third threshold, the first performance indication is the second value.

In some embodiments, the one second channel quality parameter included in the second channel quality information may be a channel quality parameter corresponding to one optimal beam obtained by actual measurement.

In some embodiments, the value of L may be 1. In a case where the value of L is 1, one first channel quality parameter included in the first channel quality information may be a channel quality parameter corresponding to one optimal beam output by the spatial beam prediction model.

In some embodiments, the value of the third threshold may be a preset RSRP value, for example, RSRP_TH2, which may be a real number greater than 0, for example, 1 dB or other values. Furthermore, the second communication node may transmit the third threshold to the first communication node via higher-layer and/or physical layer signaling.

Exemplarily, taking the third threshold value as RSRP_TH2, the first channel quality parameter as L1-RSRP, and the second channel quality parameter as L1-RSRP as an example, the first communication node may acquire a first beam parameter set and use the first beam parameter set as an input to the spatial beam prediction model. An output of the model includes L predicted L1-RSRPO, which may be understood as expecting the model to predict L optimal beams. Alternatively, the model outputs predicted L₀ L1-RSRP, and the first communication node selects L1-RSRPO corresponding to L optimal beams from the L₀ L1-RSRP. Additionally, the first communication node may also acquire a second beam parameter set, including a group of L1-RSRP (or a group of parameters such as L1-SINR, L1-RSRQ, etc.). Furthermore, it may compare values of L1-RSRP, to find L1-RSRP with the maximum parameter value, which may be denoted as L1-RSRP1.

In this case, the first communication node may determine L differences L1-RSRP_diff between the L first channel quality parameters L1-RSRP0 and the second channel quality parameter L1-RSRPO, calculate a maximum value among the L L1-RSRP_diff, and if the maximum value is less than the third threshold RSRP_TH2, the first performance indication is the first value. Alternatively, when the maximum value is greater than or equal to the third threshold RSRP_TH2, the first performance indication is the second value.

In some embodiments, the first channel quality parameter may also be L1-SINR or L1-RSRQ. The second channel quality parameter may also be L1-SINR or L1-RSRQ.

In some embodiments, a maximum value of L is determined according to received signaling, and the signaling includes higher-layer signaling and/or physical layer signaling.

In some embodiments, the first communication node determines the first performance indication based on a difference between a minimum value among the L first channel quality parameters and the second channel quality parameter.

In some embodiments, if a minimum value among differences between the L first channel quality parameters and the second channel quality parameter is less than the third threshold, the first performance indication is the first value. Alternatively, if a minimum value among differences between the L first channel quality parameters and the second channel quality parameter is greater than or equal to the third threshold, the first performance indication is the second value.

In some embodiments, the one second channel quality parameter included in the second channel quality information may be a channel quality parameter corresponding to one optimal beam obtained by actual measurement.

In some embodiments, the value of L may be 1. In a case where the value of L is 1, the one first channel quality parameter included in the first channel quality information may be a channel quality parameter corresponding to one optimal beam output by the spatial beam prediction model.

In some embodiments, the value of the third threshold may be a preset RSRP value, for example, RSRP_TH3, which may be a real number greater than 0, such as 1 dB or other values. Furthermore, the second communication node may transmit the third threshold to the first communication node via higher-layer and/or physical layer signaling.

Exemplarily, taking the value of the third threshold as RSRP_TH3, the first channel quality parameter as L1-RSRP, and the second channel quality parameter as L1-RSRP as an example, the first communication node may acquire a first beam parameter set and use the first beam parameter set as an input to the spatial beam prediction model. Moreover, an output of the model includes L predicted L1-RSRPO, which may be understood as expecting the model to predict optimal L beams. Alternatively, the model outputs predicted L₀ L1-RSRP, and the first communication node selects L1-RSRPO corresponding to L optimal beams from the L₀ L1-RSRP. Additionally, the first communication node may also acquire a second beam parameter set, including a group of L1-RSRP (or a group of parameters such as L1-SINR, L1-RSRQ, etc.). Furthermore, it may compare values of L1-RSRP, to find L1-RSRP with the maximum parameter value, which may be denoted as L1-RSRP1.

In this case, the first communication node may determine L differences L1-RSRP_diff between the L first channel quality parameters L1-RSRP0 and the second channel quality parameter L1-RSRP1, calculate a minimum value of the L L1-RSRP_diff, and if the minimum value is less than the third threshold RSRP_TH3, the first performance indication is the first value. Alternatively, if the minimum value is greater than or equal to the third threshold RSRP_TH3, the first performance indication is the second value.

In some embodiments, the first channel quality parameter may also be L1-SINR or L1-RSRQ. The second channel quality parameter may also be L1-SINR or L1-RSRQ.

In some embodiments, a maximum value of L is determined according to received signaling, and the signaling includes higher-layer signaling and/or physical layer signaling.

In some embodiments, if a difference between an average value of the L first channel quality parameters and the second channel quality parameter is less than the third threshold, the first performance indication is the first value. Alternatively, if a difference between an average value of the L first channel quality parameters and the second channel quality parameter is greater than or equal to the third threshold, the first performance indication is the second value.

In some embodiments, if a difference between a weighted average of the L first channel quality parameters and the second channel quality parameter is less than the third threshold, the first performance indication is the first value. Alternatively, if the difference between the weighted average of the L first channel quality parameters and the second channel quality parameter is greater than or equal to the third threshold, the first performance indication is the second value.

In some embodiments, if a difference between a maximum value among the L first channel quality parameters and the second channel quality parameter is less than the third threshold, the first performance indication is the first value. Alternatively, if the difference between the maximum value among the L first channel quality parameters and the second channel quality parameter is greater than or equal to the third threshold, the first performance indication is the second value.

In some embodiments, if a difference between a minimum value among the L first channel quality parameters and the second channel quality parameter is less than the third threshold, the first performance indication is the first value. Alternatively, if a difference between a minimum value among the L first channel quality parameters and the second channel quality parameter is greater than or equal to the third threshold, the first performance indication is the second value.

Scene 4: the first channel quality information includes one first channel quality parameter, the second channel quality information includes L second channel quality parameters, and the threshold group includes a fourth threshold.

In some embodiments, the first communication node determines the first performance indication based on an average value of differences between the L second channel quality parameters and the first channel quality parameter.

In some embodiments, if an average value of differences between the L second channel quality parameters and the first channel quality parameter is less than the fourth threshold, the first performance indication is the first value. Alternatively, if the average value of differences between the L second channel quality parameters and the first channel quality parameter is greater than or equal to the fourth threshold, the first performance indication is the second value.

In some embodiments, the one second channel quality parameter included in the first channel quality information may be a channel quality parameter corresponding to one predicted optimal beam output by the model.

In some embodiments, the value of the fourth threshold may be a preset RSRP value, and the second communication node may transmit the fourth threshold to the first communication node via higher-layer and/or physical layer signaling.

Exemplarily, taking the value of the fourth threshold as RSRP_TH1, the first channel quality parameter as L1-RSRP, and the second channel quality parameter as L1-RSRP as an example, the first communication node may acquire a first beam parameter set and use the first beam parameter set as an input to the spatial beam prediction model. Moreover, an output of the model includes one predicted L1-RSRPO, which may be understood as expecting the model to predict one optimal beam. Alternatively, the model outputs predicted L₀ L1-RSRPs, and the first communication node selects L1-RSRPO corresponding to one optimal beam from the L₀ L1-RSRP. Additionally, the first communication node may also acquire a second beam parameter set, including a group of L1-RSRP (or a group of parameters such as L1-SINR, L1-RSRQ, etc.). Furthermore, values of L1-RSRP may be compared, to find L L1-RSRP with the largest parameter values, which may be denoted as L1-RSRP1.

In this case, the first communication node may determine L differences L1-RSRP_diff between the first channel quality parameter L1-RSRP0 and the L second channel quality parameters L1-RSRP1, calculate an average value of the L L1-RSRP_diff, and if the average value is less than the fourth threshold RSRP_TH1, the first performance indication is the first value. Alternatively, in a case where the average value is greater than or equal to the fourth threshold RSRP_TH1, the first performance indication is the second value.

In some embodiments, the first channel quality parameter may also be L1-SINR or L1-RSRQ. The second channel quality parameter may also be L1-SINR or L1-RSRQ.

In some embodiments, a maximum value of L is determined according to received signaling, and the signaling includes higher-layer signaling and/or physical layer signaling.

In some embodiments, the first communication node determines the first performance indication based on a difference between a weighted average of the L second channel quality parameters and the first channel quality parameter.

In some embodiments, if a difference between a weighted average of the L second channel quality parameters and the first channel quality parameter is less than the fourth threshold, the first performance indication is the first value. Alternatively, if a difference between a weighted average of the L second channel quality parameters and the first channel quality parameter is greater than or equal to the fourth threshold, the first performance indication is the second value.

In some embodiments, the value of the fourth threshold may be a preset RSRP value, for example, RSRP_TH0, which may be a real number greater than 0, such as 1 dB or other values. Moreover, the second communication node may transmit the fourth threshold to the first communication node via higher-layer and/or physical layer signaling.

Exemplarily, taking the value of the fourth threshold as RSRP_TH01, the first channel quality parameter as L1-RSRP, and the second channel quality parameter as L1-RSRP as an example, the first communication node may acquire a first beam parameter set and use the first beam parameter set as an input to the spatial beam prediction model. Moreover, an output of the model includes one predicted L1-RSRPO, which may be understood as expecting the model to predict one optimal beam. Alternatively, the model outputs predicted L₀ L1-RSRPs, and the first communication node selects L1-RSRPO corresponding to one optimal beam from the L₀ L1-RSRP. Additionally, the first communication node may also acquire a second beam parameter set, including a group of L1-RSRP (or a group of parameters such as L1-SINR, L1-RSRQ, etc.). Furthermore, values of L1-RSRP may be compared, to find L L1-RSRP with the maximum parameter value, which may be denoted as L1-RSRP1.

In this case, the first communication node may assign different weights to the L second channel quality parameters L1-RSRP1, and determine a weighted average of the L second channel quality parameters L1-RSRP1. If a difference between the weighted average and L1-RSRPO is less than the fourth threshold RSRP_TH0, the first performance indication is the first value. Alternatively, if a difference between a weighted average of the L second channel quality parameters L1-RSRP0 and a first channel quality parameter L1-RSRP1 is greater than or equal to the fourth threshold RSRP_TH0, the first performance indication is the second value.

In some embodiments, the first channel quality parameter may also be L1-SINR or L1-RSRQ. The second channel quality parameter may also be L1-SINR or L1-RSRQ.

In some embodiments, a maximum value of L is determined according to received signaling, and the signaling includes higher-layer signaling and/or physical layer signaling.

In some embodiments, the first communication node determines the first performance indication based on a difference between a maximum value among the L second channel quality parameters and the first channel quality parameter.

In some embodiments, if a difference between a maximum value among the L second channel quality parameters and the first channel quality parameter is less than the fourth threshold, the first performance indication is the first value. Alternatively, if the difference between the maximum value among the L second channel quality parameters and the first channel quality parameter is greater than or equal to the fourth threshold, the first performance indication is the second value.

In some embodiments, the value of L may be 1. In a case where the value of L is 1, the one first channel quality parameter included in the first channel quality information may be a channel quality parameter corresponding to one optimal beam output by the spatial beam prediction model.

In some embodiments, the value of the fourth threshold may be a preset RSRP value, for example, RSRP_TH2, which may be a real number greater than 0, such as 1 dB or other values. Moreover, the second communication node may transmit the fourth threshold to the first communication node through higher-layer and/or physical layer signaling.

Exemplarily, taking the fourth threshold value as RSRP_TH2, the first channel quality parameter as L1-RSRP, and the second channel quality parameter as L1-RSRP as an example, the first communication node may acquire a first beam parameter set and use the first beam parameter set as an input to the spatial beam prediction model. Moreover, an output of the model includes one predicted L1-RSRPO, which may be understood as expecting the model to predict one optimal beam. Alternatively, the model outputs predicted L₀ L1-RSRP, and the first communication node selects L1-RSRPO corresponding to one optimal beam from the L₀ L1-RSRP. Additionally, the first communication node may also acquire a second beam parameter set, including a group of L1-RSRP (or a group of parameters such as L1-SINR, L1-RSRQ, etc.). Furthermore, values of L1-RSRP may be compared, to find L L1-RSRP with the maximum parameter value, which may be denoted as L1-RSRP1.

In this case, the first communication node may determine L differences L1-RSRP_diff between the L second channel quality parameters L1-RSRP1 and the first channel quality parameter L1-RSRPO, and calculate a maximum value among the L L1-RSRP_diff; if the maximum value is less than the fourth threshold RSRP_TH2, the first performance indication is the first value. Alternatively, if the maximum value is greater than or equal to the fourth threshold RSRP_TH2, the first performance indication is the second value.

In some embodiments, the first channel quality parameter may also be L1-SINR or L1-RSRQ. The second channel quality parameter may also be L1-SINR or L1-RSRQ.

In some embodiments, a maximum value of L is determined according to received signaling, and the signaling includes higher-layer signaling and/or physical layer signaling.

In some embodiments, the first communication node determines the first performance indication based on a difference between a minimum value among the L second channel quality parameters and the first channel quality parameter.

In some embodiments, if a minimum value of differences between the L second channel quality parameters and the first channel quality parameter is less than the fourth threshold, the first performance indication is the first value. Alternatively, if the minimum value of the differences between the L second channel quality parameters and the first channel quality parameter is greater than or equal to the fourth threshold, the first performance indication is the second value.

In some embodiments, the value of the fourth threshold may be a preset RSRP value, for example, RSRP_TH3, which may be a real number greater than 0, such as 1 dB or other values. Moreover, the second communication node may transmit the fourth threshold to the first communication node via higher-layer and/or physical layer signaling.

Exemplarily, taking the value of the fourth threshold as RSRP_TH3, the first channel quality parameter as L1-RSRP, and the second channel quality parameter as L1-RSRP as an example, the first communication node may acquire a first beam parameter set and use the first beam parameter set as an input to the spatial beam prediction model. Moreover, an output of the model includes one predicted L1-RSRPO, which may be understood as expecting the model to predict one optimal beam. Alternatively, the model outputs predicted L₀ L1-RSRP, and the first communication node selects L1-RSRPO corresponding to one optimal beam from the L₀ L1-RSRP. Additionally, the first communication node may also acquire a second beam parameter set, including a group of L1-RSRP (or a group of parameters such as L1-SINR, L1-RSRQ, etc.). Furthermore, values of L1-RSRP may be compared, to find L L1-RSRP with the largest parameter value, which may be denoted as L1-RSRP1.

In this case, the first communication node may determine L differences L1-RSRP_diff between the L second channel quality parameters L1-RSRP1 and the first channel quality parameter L1-RSRP1, and calculate a minimum value among the L L1-RSRP_diff; if the minimum value is less than the fourth threshold RSRP_TH3, the first performance indication is the first value. Alternatively, if the minimum value is greater than or equal to the fourth threshold RSRP_TH3, the first performance indication is the second value.

In some embodiments, the first channel quality parameter may also be L1-SINR or L1-RSRQ. The second channel quality parameter may also be L1-SINR or L1-RSRQ.

In some embodiments, a maximum value of L is determined according to received signaling, and the signaling includes higher-layer signaling and/or physical layer signaling.

In some embodiments, if an average value of differences of the L second channel quality parameters and the first channel quality parameter is less than the fourth threshold, the first performance indication is the first value. Alternatively, if a difference between an average value of the L second channel quality parameters and the first channel quality parameter is greater than or equal to the fourth threshold, the first performance indication is the second value.

In some embodiments, if a difference between a weighted average of the L second channel quality parameters and the first channel quality parameter is less than the fourth threshold, the first performance indication is the first value. Alternatively, if a difference between a weighted average of the L second channel quality parameters and the first channel quality parameter is greater than or equal to the fourth threshold, the first performance indication is the second value.

In some embodiments, if a difference between a maximum value among the L second channel quality parameters and the first channel quality parameter is less than the fourth threshold, the first performance indication is the first value. Alternatively, if the difference between the maximum value among the L second channel quality parameters and the first channel quality parameter is greater than or equal to the fourth threshold, the first performance indication is the second value.

In some embodiments, if a difference between a minimum value among the L second channel quality parameters and the first channel quality parameter is less than the fourth threshold, the first performance indication is the first value. Alternatively, if the difference between the minimum value among the L second channel quality parameters and the first channel quality parameter is greater than or equal to the fourth threshold, the first performance indication is the second value.

Scene 5: The first channel quality includes L probabilities, and the threshold group includes a fifth threshold.

In some embodiments, if a sum of P largest probabilities among the L probabilities is greater than or equal to the fifth threshold, the first performance indication is the first value, where P is a positive integer. Alternatively, if the sum of P largest probabilities among the L probabilities is less than the fifth threshold, the first performance indication is the second value.

Exemplarily, taking the fifth threshold as P_TH, the first communication node obtains a first beam parameter array and uses the first beam parameter array as an input to the model. An output of the model includes L₀ predicted probabilities P or confidence levels; P largest probability values of L probabilities are obtained, and summed to obtain a probability sum value, denoted as P0. L₀ is a positive integer, such as 1, 2, etc., where the value of L₀ may be a number of reference signal resources in a second reference signal set, or a number of all beams used by the second communication node and the first communication node to transmit information.

Furthermore, in a case where P0 is greater than or equal to P_TH, it may be determined that the model is valid for this sample, that is, the first performance indication is the first value. Alternatively, in a case where P0 is less than P_TH, it may be determined that the model is invalid for this sample, that is, the first performance indication is the second value.

Scene 6: the first channel quality includes L first channel quality parameters, the second channel quality includes L second channel quality parameters, and the threshold group includes a sixth threshold.

In some embodiments, the first communication node determines multiple channel quality parameter differences between the L first channel quality parameters and the L second channel quality parameters, and determines an evaluation parameter. If the evaluation parameter is less than the sixth threshold, the first performance indication is the first value. Alternatively, if the evaluation parameter is greater than or equal to the sixth threshold, the first performance indication is the second value; where each of the channel quality parameter differences is an absolute value of a difference between one of the second channel quality parameters and a corresponding one of the first channel quality parameters. Moreover, the evaluation parameter is a channel quality parameter difference corresponding to a preset cumulative distribution probability, in a cumulative distribution function (CDF) determined by the multiple channel quality parameter differences.

Exemplarily, the first communication node obtains a first beam parameter array and uses the first beam parameter array as an input to the model. An output of the model includes L predicted L1-RSRP, denoted as L1-RSRPO. The first communication node may also obtain a second beam parameter array, which is a group of L1-RSRP, which corresponds to L1-RSRP corresponding to beams actually transmitted by the terminal, denoted as L1-RSRP0. Subtract each L1-RSRP0 from the corresponding L1-RSRP1 value with the same index, and calculate an absolute value thereof to obtain L L1-RSRP differences, denoted as L1-RSRP_diff.

In an example, the first communication node may also perform operations such as sorting and interpolation on the L L1-RSRP_diff, to obtain a value of a CDF curve, and take an L1-RSRP_diff at a position of x% (a preset cumulative distribution probability), denoted as L1-RSRP_diff_x. In an example, the L1-RSRP_diff may be sorted, and a value at an index position of (L * x%) may be taken, denoted as L1-RSRP_diff_x, where f() is a rounding function, including one of a ceiling rounding, a floor rounding, or rounding to the nearest integer.

Furthermore, if L1-RSRP_diff_x is less than the sixth threshold RSRP_TH_x, the model is considered valid for this sample, and its first performance indication is the first value; otherwise, the model is invalid for this sample, and its first performance indication is the second value.

In some embodiments, the sixth threshold may be RSRP_TH_x, and the sixth threshold may be a real number greater than 0. For example, it is 1 dB or other values. A value of RSRP_TH_x may be transmitted to the first communication node through higher-layer and/or physical layer signaling of the base station, and the first communication node receives the higher-layer and/or physical layer signaling to obtain the RSRP_TH_x. Here, x in x% may be configured by the second communication node (the base station) to the first communication node as needed, or the first communication node may obtain x according to experience, actual measurement, or statistics, for example, x=5, 50, 95, etc.

In some examples, the first communication node collects S samples within a time window and counts accuracy of beam prediction according to the collected S samples respectively, including L beam prediction accuracies.

In an example, a value of L may be 1, and a calculation method for the beam prediction accuracy is: determining a predicted optimal beam index based on a prediction result of the model, denoted as CRIO, where the optimal beam index may be a direct output of the model, or may be obtained by finding an index corresponding to a maximum L1-RSRP value based on L1-RSRP output by the model. Furthermore, the first communication node obtains, based on measurement, a beam index with maximum L1-RSRP in all beam sets, denoted as CRI1; if CRI1 and CRIO are the same, a counter is increased by 1, otherwise the counter remains unchanged. Count S such samples, and divide a value S0 of the counter by S (i.e., calculate a ratio of S0 to S), to obtain accuracy of the one CRIO of beam prediction.

In another example, a calculation method for one beam prediction accuracy is: assuming that a prediction result of the model is L1-RSRP, and a maximum value thereof is denoted as L1-RSRPO. Additionally, the first communication node obtains L1-RSRP in all beam sets based on measurement, and a maximum value thereof is denoted as L1-RSRP1; if an absolute value of a difference between L1-RSRP0 and L1-RSRP1 is less than RSRP_TH, the counter is increased by 1, otherwise, the counter remains unchanged. Count S such samples, and divide a value SO of the counter by S (i.e., calculate a ratio of SO to S), to obtain the accuracy of T1 CRIOs of beam prediction.

In yet another example, the value of L is multiple, and a calculation method for beam prediction accuracy of L CRIOs is: determining a predicted optimal beam index based on a prediction result of the model, for example, CRIO, which may be a direct output of the model, or may be obtained by finding an index corresponding to a maximum L1-RSRP value based on L1-RSRP output by the model. Additionally, the first communication node obtains K beam indexes with maximum L1-RSRP in all beam sets based on measurement, denoted as CRI1s; if the CRIO and one value among the CRI1s are the same, the counter is increased by 1, otherwise, the counter remains unchanged. Count S such samples, and divide a value S0 of the counter by S (i.e., calculate a ratio of SO to S), to obtain accuracy of the beam prediction result.

In yet another example, the value of L is multiple, and a calculation method for beam prediction accuracy of L CRIOs is: determining, based on a prediction result of the model, predicted optimal K beam indexes, for example, CRIOs, which may be a direct output of the model, or may be obtained by finding indexes corresponding to K maximum L1-RSRP values based on L1-RSRP output by the model. Additionally, the first communication node obtains a beam index with maximum L1-RSRP in all beam sets based on measurement, denoted as CRI1; if at least one value among the CRIOs is the same as the CRI1, the counter is increased by 1, otherwise, the counter remains unchanged. Count S such samples, and divide a value SO of the counter by S (i.e., calculate a ratio of SO to S), to obtain accuracy of the beam prediction result.

In yet another example, the value of L is multiple, and a calculation method for beam prediction accuracy of L CRIOs is that: assuming that a prediction result of the model is L1-RSRP, and a maximum value thereof is denoted as L1-RSRPO. Additionally, the first communication node obtains L1-RSRP in all beam sets based on measurement, and K maximum values thereof are denoted as L1-RSRP1; if an absolute value of a difference between L1-RSRPO and each L1-RSRP1 is denoted as RSRP_diff, and if a minimum value of RSRP_diff is less than RSRP_TH, the counter is increased by 1, otherwise, the counter remains unchanged. Count S such samples, and divide a value SO of the counter by S (i.e., calculate a ratio of S0 to S), to obtain accuracy of the beam prediction result.

In yet another example, the value of L is multiple, and a calculation method for beam prediction accuracy of L CRIOs is that: assuming that a prediction result of the model is L1-RSRP, and K maximum values thereof are denoted as L1-RSRP0. Additionally, the first communication node obtains L1-RSRP in all beam sets based on measurement, and a maximum value thereof is denoted as L1-RSRP1; if an absolute value of a difference between each L1-RSRP0 and L1-RSRP1 is denoted as RSRP_diff, and if a minimum value of RSRP_diff is less than the threshold value RSRP_TH, the counter is increased by 1, otherwise the counter remains unchanged. Count S such samples, and divide a value S0 of the counter by S (i.e., calculate a ratio of SO to S), to obtain TopK accuracy of beam prediction. In an example, if Top1 accuracy of beam prediction is less than a threshold Top1_TH, the model is considered valid, and its first performance metric is the first value; otherwise, the first performance metric is the second value. In an example, if TopK accuracy of beam prediction is less than a threshold TopK_TH, the model is considered valid, and its first performance metric is the first value; otherwise, the first performance metric is the second value.

In a case of performing temporal beam prediction, for temporal beam prediction of a single sample, it includes performance metrics of N slots, and a performance metric of each slot may be determined based on any method from the above scene 1 to scene 6. The first communication node may acquire N pieces of first channel quality information and N pieces of second channel quality information. Furthermore, the performance indication is determined according to the threshold group, the N pieces of first channel quality information, and the N pieces of second channel quality information. N is a positive integer.

It should be noted that the above N pieces of first channel quality information may be understood as one sample of temporal beam prediction, and the N pieces of second channel quality information are labels. Furthermore, the first communication node may monitor a temporal beam prediction model based on the one sample and N labels.

In some embodiments, a performance indication to be determined includes a second performance indication.

The first communication node may determine N first performance indications according to the N pieces of first channel quality information and the N pieces of second channel quality information; where the N first performance indications have a corresponding relationship with the N pieces of first channel quality information. Moreover, the second performance indication is determined according to the N first performance indications.

The first performance indication here may be used to indicate performance of an information processing mode corresponding to each first channel quality information among N pieces of first channel quality information, for example, performance of beam prediction. The second performance indication is used to indicate the beam prediction performance corresponding to the entire N pieces of first channel quality information corresponding to the sample, that is, the finally determined performance indication of beam prediction.

In some embodiments, the second performance indication may include two values, for example, a third value and a fourth value. Exemplarily, the third value and the fourth value are different values, the third value may be used to indicate that a model monitoring result is valid, or that the model is applicable to a currently-used beam prediction scenario, and the fourth value may be used to indicate that a model monitoring result is invalid, or that the model is not applicable to a currently-used beam prediction scenario. Regarding the third value, reference may be made to the related description of the first value above, and regarding the fourth value, reference may be made to the related description of the second value above, which will not be repeated here.

It should be understood that the first communication node may determine the first performance indication based on any one of the methods described in the above scene 1 to scene 6.

Exemplarily, temporal beam prediction needs to be performed, for temporal beam prediction of a single sample, it includes performance metrics of N slots, and the performance metric of each slot may be determined based on any one of the methods described in the above scene 1 to scene 6. That is, the first communication node receives and measures reference signal resources in a first reference signal resource set in N0 slots respectively, to obtain N0 beam parameter information arrays, as an input of the model, and the model outputs beam parameter information arrays on the N slots. In some embodiments, for each slot of N slots, the first communication node may determine a sub-model monitoring metric of each slot of the N slots (i.e., the first performance indication) according to the type of first channel quality information output by the model, based on any one of the methods described in the above scene 1 to scene 6.

Furthermore, there are at least the following examples where the first communication node determines the second performance indication according to the N first performance indications.

Example 1: the first communication node determines the second performance indication based on a ratio of a number of first performance indications that are first values among the N first performance indications to N.

In some embodiments, the threshold includes a seventh threshold, and if a ratio of a number of first performance indications that are first values among the N first performance indications to N is greater than or equal to the seventh threshold, the second performance indication is the third value. Alternatively, if a ratio of a number of first performance indications that are first values among the N first performance indications to N is less than the seventh threshold, the second performance indication is the fourth value.

In some embodiments, if a ratio of a number of first performance indicationsthat are second values among the N first performance indications to N is less than or equal to the seventh threshold, the second performance indication is the third value; or, if a ratio of a number of first performance indications that are second values among the N first performance indications to N is greater than the seventh threshold, the second performance indication is the fourth value.

Exemplarily, the first communication node may, according to the obtained N first performance indications (sub-model monitoring metrics) including x₁, x₂, ..., x_{N}, determine the number N₁ of first performance indications that are first values, in a case where N₁/N is greater than or equal to a seventh threshold N_TH, the first communication node may determine that the second performance indication (i.e., model monitoring metric) is the third value, otherwise, the second performance indication is the fourth value.

Alternatively, the first communication node may determine the number N₂ of first performance indications that are second values among the first performance indications, and in a case where N₂/N is less than or equal to the seventh threshold N_TH, the first communication node may determine that the second performance indication (i.e., model monitoring metric) is the third value, otherwise, the second performance indication is the fourth value.

Example 2: the first communication node determines the second performance indication based on a number of first performance indications that are first values among the N first performance indications.

In some embodiments, if the number of first performance indications that are first values among the N first performance indications is greater than or equal to an eighth threshold, the second performance indication is the third value. Alternatively, if the number of first performance indications that are first values among the N first performance indications is less than the eighth threshold, the second performance indication is the fourth value.

In some embodiments, if a number of first performance indications that are second values among the N first performance indications is less than or equal to the eighth threshold, the second performance indication is the third value. Alternatively, a number of first performance indications that are second values among the N first performance indications is greater than the eighth threshold, the second performance indication is the fourth value.

Exemplarily, the first communication node may, according to the obtained N first performance indications (sub-model monitoring metrics) including x₁, x₂, ..., x_{N}, determine the number N₁ of first performance indications that are first values, and in a case where N₁ is greater than or equal to an eighth threshold N_TH1, the first communication node may determine that the second performance indication (i.e., the model monitoring metric) is the third value, otherwise, the second performance indication is the fourth value.

Alternatively, the first communication node may determine the number N₂ of first performance indications that are second values among the first performance indications, and in a case where N₂ is less than or equal to the eighth threshold N_TH1, the first communication node may determine that the second performance indication (i.e., the model monitoring metric) is the third value, otherwise, the second performance indication is the fourth value.

Example 3: the first communication node determines the second performance indication based on a number of first performance indications that are first values continuously in time sequence among the N first performance indications.

In some embodiments, if a number of first performance indications that are first values continuously in time sequence among the N first performance indications is greater than or equal to a ninth threshold, the second performance indication is the third value. Alternatively, if a number of first performance indications that are first values continuously in time sequence among the N first performance indications is less than the ninth threshold, the second performance indication is the fourth value.

In some embodiments, if a number of first performance indications that are second values continuously in time sequence among the N first performance indications is less than or equal to the ninth threshold, the second performance indication is the third value. Alternatively, if a number of first performance indications that are second values continuously in time sequence among the N first performance indications is greater than the ninth threshold, the second performance indication is the fourth value.

Exemplarily, the first communication node may, according to the obtained N first performance indications (sub-model monitoring metrics) including x₁, x₂, ..., x_{N}, count the number N₁ of first performance indications that continuously are first values, and in a case where N₁ is greater than a ninth threshold N_TH2, the first communication node may determine that the second performance indication (i.e., model monitoring metric) is the third value, otherwise, the second performance indication is the fourth value.

Alternatively, the first communication node may determine the number N₂ of first performance indications that continuously are second values among the first performance indications, and in a case where N₂ is less than or equal to the ninth threshold N_TH2, the first communication node may determine that the second performance indication (i.e., the model monitoring metric) is the third value, otherwise, the second performance indication is the fourth value.

Example 4: the first communication node determines the second performance indication based on a weighted sum of values of the N first performance indications.

In some embodiments, if the weighted sum of values of the N first performance indications is greater than or equal to a tenth threshold, the second performance indication is the third value. Alternatively, if the weighted sum of values of the N first performance indications is less than the tenth threshold, the second performance indication is the fourth value.

Exemplarily, the first communication node acquires N first performance indications x₁, x₂, ..., x_{N}, assigns different weights w₁, w₂, ..., w_{N} to the first performance indications on different slots, respectively, and calculates their weighted sum Z=x₁*w₁+x₂*w₂+, ..., +x_{N}*w_{N}. If Z is greater than the tenth threshold N_TH3, it is determined that the second performance indication is the third value, otherwise, the second performance indication is the fourth value, where wᵢ, wⱼ are greater than or equal to 0, and preferably, wᵢ>=wⱼ and 1<=i<j<=N.

Example 5: based on N pieces of first channel quality information output by the model on N slots, determine a maximum L1-RSRP corresponding to each slot that is predicted respectively in the N slots, and based on N maximum L1-RSRP, calculate an average value of the N L1-RSRP, and determine the model monitoring metric according to a relationship between the average value and a threshold RSRP_TH. Alternatively, the first communication node may calculate an average value of prediction accuracies of one first channel quality parameter corresponding to each of the N slots, and determine the model monitoring metric according to a relationship between the average value and a threshold Top1_TH. Alternatively, the first communication node may calculate an average value of TopK prediction accuracies of K first channel quality parameter corresponding to each of the N slots, and determine the model monitoring metric according to a relationship between the average value and a threshold TopK_TH. Alternatively, it determines the model monitoring metric according to a relationship between an average value of K maximum probability sums predicted in the N slots and a threshold P_TH. That is, the first communication node may also determine the second performance indication, by calculating an average value of the N slots according to the output of the model in the N slots, and then comparing the average value with the corresponding threshold.

Example 6: the first channel quality information includes a data drift value, and the threshold group includes a seventeenth threshold. In a case where the data drift value is greater than or equal to the seventeenth threshold, the second performance indication is the third value; in a case where the data drift value is less than the seventeenth threshold, the second performance indication is the fourth value.

In some embodiments, the first communication node may obtain a first beam parameter array, count its data characteristics, such as a probability distribution or a CDF curve, compare the data characteristics with statistical characteristics during training data, and if the difference Data_D between them is less than a threshold Data_TH, it considers that the model is valid for this sample, that is, the second performance indication is the third value; otherwise, the model is invalid for this sample, that is, the second performance indication is the fourth value.

In an example, the first communication node may first determine a value of the model monitoring metric according to the statistical characteristics of the obtained first beam parameter array and the statistical characteristics of the training data, and, in a case where the value indicates to be valid, determine that the second performance indication is the third value; otherwise, the first communication node may further determine whether the model is valid according to any one of the foregoing scene 1 to scene 6.

In an example, the Data_TH is a threshold and is a real number greater than 0. The value of Data_TH may be transmitted to the terminal via higher-layer and/or physical-layer signaling from the second communication node, and the first communication node obtains the Data_TH by receiving the higher-layer and/or physical-layer signaling.

Example 7: the first channel quality information includes a link performance parameter, and the threshold group includes a sixteenth threshold. In a case where the link performance parameter is greater than or equal to the sixteenth threshold, the second performance indication is the third value. If the link performance parameter is less than the sixteenth threshold, the second performance indication is the fourth value.

Exemplarily, the first communication node may count an average value Throughput of throughputs within a time period, or count BLER of PDSCH or PDCCH within a time period, and in a case where the Throughput is greater than a threshold Throughput_TH or the BLER is less than a threshold BLER_TH, it determines that the model is valid for this sample and the second performance indication is the third value; otherwise, the model is invalid for this sample and the second performance indication is the fourth value.

In an example, the first communication node may first determine the value of the model monitoring metric according to the obtained Throughput or BLER, and, in a case where the Throughput is greater than the threshold Throughput_TH or the BLER is less than the threshold BLER_TH, it determines that the second performance indication is the third value; otherwise, it may further determine whether the mode is valid according to any method in the foregoing scene 1 to scene 6, and, in a case where the mode is valid, it determines that the second performance indication is the third value; otherwise, the second performance indication is the fourth value.

In a case of performing spatial beam prediction, for spatial beam prediction of multiple samples, the performance metric of each sample may be determined based on any method in the foregoing scene 1 to scene 6. The first communication node may acquire M first channel quality information groups and Q second channel quality information groups, where M and Q are both positive integers. Furthermore, the performance indication is determined according to the threshold group, the M first channel quality information groups, and the Q second channel quality information groups.

It should be noted that the M first channel quality information groups can be understood as M samples for spatial beam prediction, and the Q second channel quality information groups are labels. Furthermore, the first communication node may monitor the spatial beam prediction model based on the M samples and the Q labels.

In some embodiments, the performance indication to be determined includes a third performance indication.

The first communication node may determine M first performance indications according to the M first channel quality information groups and the Q second channel quality information groups. The M first channel quality information groups have a corresponding relationship with the M first performance indications. Moreover, the third performance indication is determined according to the M first performance indications.

The first performance indication may be used to indicate beam prediction performance corresponding to each first channel quality information group of the M first channel quality information groups. The third performance indication is used to indicate beam prediction performance corresponding to the entire M first channel quality information groups, that is, the performance indication of beam prediction finally determined. In some embodiments, the third performance indication may include two values, for example, a fifth value and a sixth value. Exemplarily, the fifth value and the sixth value are different values, the fifth value may be used to indicate that a model monitoring result is valid, or the model is applicable to a currently-used beam prediction scenario, and the sixth value may be used to indicate that a model monitoring result is invalid, or the model is not applicable to the currently-used beam prediction scenario. Regarding the fifth value, reference may be made to the related description of the foregoing first value; regarding the sixth value, reference may be made to the related description of the foregoing second value, which will not be repeated here.

Example 8: the first communication node determines the third performance indication based on a ratio of a number of first performance indications that are first values among the M first performance indications to M.

In some embodiments, the threshold includes an eleventh threshold. If the ratio of the number of first performance indications that are first values among the M first performance indications to M is greater than or equal to the eleventh threshold, the third performance indication is the fifth value; or, if the ratio of the number of first performance indications that are first values among the M first performance indications to M is less than the eleventh threshold, the third performance indication is the sixth value.

In some embodiments, in a case where the ratio of the number of first performance indications that take the second value among the M first performance indications to M is less than or equal to the eleventh threshold, the third performance indication is the fifth value. Alternatively, in a case where the ratio of the number of first performance indications that are second values among the M first performance indications to M is greater than the eleventh threshold, the third performance indication is the sixth value.

Exemplarily, the first communication node may, according to the first performance indications y₁, y₂, ..., y_{M} of M samples, count the number M₁ of first performance indications that are first values, and in a case where M₁/M is greater than or equal to the eleventh threshold T_TH, determine that the third performance indication is the fifth value; otherwise, the sixth value. Alternatively, it counts the number M₂ of first performance indications that are second values, and, in a case where M₂/M is less than or equal to the eleventh threshold T_TH, determines that the third performance indication is the fifth value; otherwise, the sixth value. T_TH may be obtained by receiving higher-layer and/or physical layer signaling from the second communication node, or may be determined according to the first communication node itself.

Example 9: the first communication node determines the third performance indication based on the number of first performance indications that are first values among the M first performance indications.

In some embodiments, the threshold includes a twelfth threshold. If the number of first performance indications that are first values among the M first performance indications is greater than or equal to the twelfth threshold, the third performance indication is the fifth value; or, if the number of first performance indications that are first values among the M first performance indications is less than the twelfth threshold, the third performance indication is the sixth value.

In some embodiments, if the number of first performance indications that are second values among the M first performance indications is less than or equal to the twelfth threshold, the third performance indication is the fifth value. Alternatively, if the number of first performance indications that are second values among the M first performance indications is greater than the twelfth threshold, the third performance indication is the sixth value.

Exemplarily, the first communication node may, according to the first performance indications y₁, y₂, ..., y_{M} of M samples, count the number M₁ of first performance indications that are first values, and, in a case where M₁ is greater than or equal to the twelfth threshold T_TH1, determine that the third performance indication is the fifth value; otherwise, the sixth value. Alternatively, it counts the number M₂ of first performance indications that are second values, and, in a case where M₂ is less than or equal to the twelfth threshold T_TH1, determines that the third performance indication is the fifth value; otherwise, the sixth value. T_TH1 may be obtained by receiving higher-layer and/or physical layer signaling from the second communication node, or may be determined according to the first communication node itself.

Example 10: the first communication node determines the third performance indication based on a number of first performance indications that are first values continuously in time sequence among the M first performance indications.

In some embodiments, the threshold group includes a thirteenth threshold. If the number of first performance indications that are first values continuously in time sequence among the M first performance indications is greater than or equal to the thirteenth threshold, the third performance indication is the fifth value. Alternatively, if the number of first performance indications that are first values continuously in time sequence among the M first performance indications is less than the thirteenth threshold, the third performance indication is the sixth value.

In some embodiments, if the number of first performance indications that are second values continuously in time sequence among the M first performance indications is less than or equal to the thirteenth threshold, the third performance indication is the fifth value. Alternatively, if the number of first performance indications that are second values continuously in time sequence among the M first performance indications is greater than the thirteenth threshold, the third performance indication is the sixth value.

For example, the first communication node may, according to the obtained model monitoring metrics y₁, y₂, ..., y_{M} of the M samples, count the number M₁ of metrics that continuously are first values, and in a case where M₁ is greater than or equal to the thirteenth threshold T_TH2, determine that the third performance indication is the fifth value; otherwise, the sixth value. In an example, if the first performance indications of the subsequent continuous M-T_TH2 slots are all first values, it determines that the third performance indication is the fifth value; otherwise, the sixth value. Alternatively, it counts the number M₂ of metrics that continuously are second values, and in a case where M₂ is less than or equal to the thirteenth threshold T_TH2, determines that the third performance indication is the fifth value; otherwise, the sixth value. T_TH2 may be obtained by receiving higher-layer and/or physical layer signaling from the second communication node, or may be determined according to the first communication node itself.

Example 11: the threshold group includes a fourteenth threshold J, where J is a positive integer; if first J first performance indications in time sequence among the M first performance indications are all second values, and a number of first performance indications that are first values among other M-J first performance indications is greater than or equal to the fourteenth threshold, the third performance indication is the fifth value. Alternatively, if first J first performance indications in time sequence among the M first performance indications are all second values, and a number of first performance indications that are first values among other M-J first performance indications is less than the fourteenth threshold, the third performance indication is the sixth value.

Alternatively, if first J first performance indications in time sequence among the M first performance indications are all second values, and a number of first performance indications that are second values among other M-J first performance indications is less than or equal to the fourteenth threshold, the third performance indication is the fifth value. Alternatively, if first J first performance indications in time sequence among the M first performance indications are all second values, and a number of first performance indications that are second values among other M-J first performance indications is greater than the fourteenth threshold, the third performance indication is the sixth value.

Example 12: the threshold group includes a fifteenth threshold, and if a weighted sum of values of M first performance indications is greater than or equal to the fifteenth threshold, the third performance indication is the fifth value. Alternatively, if a weighted sum of values of M first performance indications is less than the fifteenth threshold, the third performance indication is the sixth value.

In some embodiments, one first channel quality information group corresponds to one measurement period, and in a process of calculating the weighted sum, an earlier measurement period corresponds to a greater weight.

Exemplarily, the first communication node obtains first performance indications y₁, y₂, ..., y_{M} of M samples, and assigns different weights to the model monitoring metric on different slots, the weights being w₁, w₂, ..., w_{N}, respectively, and calculates their weighted sum Z=y₁*w₁+y₂*w₂+, ..., +y_{N}*w_{N}. If Z is greater than a threshold T_TH3, it is determined that the third performance indication is the fifth value; otherwise, the sixth value, where wᵢ and wⱼ are values greater than or equal to 0, and preferably, wᵢ <= wⱼ, and 1 <= i < j <= N, that is, a weight corresponding to a sample in a latter slot is larger. T_TH3 is obtained by receiving higher-layer and/or physical layer signaling from the second communication node, or is determined according to the first communication node itself.

In a case of performing temporal beam prediction, for temporal beam prediction of multiple samples, the first communication node may acquire M first channel quality information groups and Q second channel quality information groups, where M and Q are both positive integers. Furthermore, the performance indication is determined according to the threshold group, the M first channel quality information groups, and the Q second channel quality information groups.

It should be noted that the above M first channel quality information groups may be understood as M samples for temporal beam prediction, and the Q second channel quality information groups are labels. Furthermore, the first communication node may monitor the temporal beam prediction model based on the M samples and the Q labels.

In some embodiments, the performance indication to be determined includes a third performance indication.

The first communication node may determine M second performance indications according to the M first channel quality information groups and the Q second channel quality information groups. The M first channel quality information groups and the M second performance indications have a corresponding relationship. Moreover, the third performance indication is determined according to the M second performance indications.

The second performance indication may be used to indicate beam prediction performance corresponding to each first channel quality information group of the M first channel quality information groups. The third performance indication is used to indicate beam prediction performance corresponding to the entire M first channel quality information groups, that is, the performance indication of beam prediction finally determined. In some embodiments, the third performance indication may include two values, for example, a fifth value and a sixth value. Exemplarily, the fifth value and the sixth value are different values, the fifth value may be used to indicate that a model monitoring result is valid, or the model is applicable to a currently-used beam prediction scenario, and the sixth value may be used to indicate that a model monitoring result is invalid, or the model is not applicable to the currently-used beam prediction scenario. Regarding the fifth value, reference may be made to the related description of the foregoing first value; regarding the sixth value, reference may be made to the related description of the foregoing second value, which will not be repeated here.

It should be understood that the first communication node may determine the second performance indication based on any method in the above example 1 to example 7.

Exemplarily, the above M samples (M first channel quality information groups) may be obtained on different slots, one of which may be within a monitoring window, for example, M measurement periods may be set, each measurement period is spaced by D slots, one sample may be measured and obtained in each measurement period, thereby obtaining M samples, and each sample may correspond to one second performance indication.

In some embodiments, there are at least the following examples where the first communication node determines the third performance indication according to N second performance indications.

Example 13: the first communication node determines the third performance indication based on a ratio of a number of second performance indications that are third values among M second performance indications to M.

In some embodiments, the threshold includes an eleventh threshold. If the ratio of the number of second performance indications that are third values among the M second performance indications to M is greater than or equal to the eleventh threshold, the third performance indication is the fifth value; or, if the ratio of the number of second performance indications that are third values among the M second performance indications to M is less than the eleventh threshold, the third performance indication is the sixth value.

In some embodiments, if a ratio of a number of second performance indications that are fourth values among the M second performance indications to M is less than or equal to the eleventh threshold, the third performance indication is the fifth value. Alternatively, if the ratio of the number of second performance indications that are fourth values among the M second performance indications to M is greater than the eleventh threshold, the third performance indication is the sixth value.

Exemplarily, the first communication node may, according to second performance indications y₁, y₂, ..., y_{M} of M samples, count the number M₁ of second performance indications that are third values, and in a case where M₁/M is greater than or equal to the eleventh threshold T_TH, determine that the third performance indication is the fifth value; otherwise, the sixth value. Alternatively, count the number M₂ of second performance indications that are fourth values, and in a case where M₂/M is less than or equal to the eleventh threshold T_TH, determine that the third performance indication is the fifth value; otherwise, the sixth value. T_TH may be obtained by receiving higher-layer and/or physical layer signaling from the second communication node, or may be determined according to the first communication node itself.

Example 14: the first communication node determines the third performance indication based on a number of second performance indications that are third values among M second performance indications.

In some embodiments, the threshold includes a twelfth threshold. If the number of second performance indications that are third values among M second performance indications is greater than or equal to the twelfth threshold, the third performance indication is the fifth value. Alternatively, if the number of second performance indications that are third values among M second performance indications is less than the twelfth threshold, the third performance indication is the sixth value.

In some embodiments, if a number of second performance indications that are fourth values among M second performance indications is less than or equal to the twelfth threshold, the third performance indication is the fifth value. Alternatively, the number of second performance indications that are fourth values among M second performance indications is greater than the twelfth threshold, the third performance indication is the sixth value.

Exemplarily, the first communication node may, according to second performance indications y₁, y₂, ..., y_{M} of M samples, count the number M₁ of second performance indications that are third values, and in a case where M₁ is greater than or equal to the twelfth threshold T_TH1, determine that the third performance indication is the fifth value; otherwise, the sixth value. Alternatively, count the number M₂ of second performance indications that are fourth values, and in a case where M₂ is less than or equal to the twelfth threshold T_TH1, determine that the third performance indication is the fifth value; otherwise, the sixth value. T_TH1 may be obtained by receiving higher-layer and/or physical layer signaling from the second communication node, or may be determined according to the first communication node itself.

Example 15: the first communication node determines the third performance indication based on a number of second performance indications that are third values continuously in time sequence among M second performance indications.

In some embodiments, the threshold group includes a thirteenth threshold. If a number of second performance indications that are third values continuously in time sequence among M second performance indications is greater than or equal to the thirteenth threshold, the third performance indication is the fifth value. Alternatively, if the number of second performance indications that are third values continuously in time sequence among M second performance indications is less than the thirteenth threshold, the third performance indication is the sixth value.

In some embodiments, if a number of second performance indications that are fourth values continuously in time sequence among M second performance indications is less than or equal to the thirteenth threshold, the third performance indication is the fifth value. Alternatively, if the number of second performance indications that are fourth values continuously in time sequence among M second performance indications is greater than the thirteenth threshold, the third performance indication is the sixth value.

Exemplarily, the first communication node, according to obtained model monitoring metrics y₁, y₂, ..., y_{M} of M samples, counts the number M₁ of model monitoring metrics that are third values continuously, and in a case where M₁ is greater than or equal to the thirteenth threshold T_TH2, determines that the third performance indication is the fifth value; otherwise, the sixth value. In an example, if second performance indications in subsequent continuous M-T_TH2 slots are all third values, it is determined that the third performance indication is the fifth value; otherwise, the sixth value. Alternatively, count the number M₂ of model monitoring metrics that continuously are fourth values, and in a case where M₂ is less than or equal to the thirteenth threshold T_TH2, determine that the third performance indication is the fifth value; otherwise, the sixth value. T_TH2 may be obtained by receiving higher-layer and/or physical layer signaling from the second communication node, or may be determined according to the first communication node itself.

Example 16: the threshold group includes a fourteenth threshold J, where J is a positive integer; if first J second performance indications in time sequence among the M second performance indications are all fourth values, and a number of second performance indications that are third values among other M-J second performance indications is greater than or equal to the fourteenth threshold, the third performance indication is the fifth value. Alternatively, if first J second performance indications in time sequence among the M second performance indications are all fourth values, and a number of second performance indications that are third values among other M-J second performance indications is less than the fourteenth threshold, the third performance indication is the sixth value.

Alternatively, if first J second performance indications in time sequence among the M second performance indications are all fourth values, and a number of second performance indications that are fourth values among other M-J second performance indications is less than or equal to the fourteenth threshold, the third performance indication is the fifth value. Alternatively, if first J second performance indications in time sequence among the M second performance indications are all fourth values, and a number of second performance indications that are fourth values among other M-J second performance indications is greater than the fourteenth threshold, the third performance indication is the sixth value.

Example 17: the first communication node counts the number M₁ of second performance indications that are third values, according to the obtained second performance indications y₁, y₂, ..., y_{M} of M samples, and if M₁/M is greater than a threshold T_TH, and T1 is greater than or equal to a threshold TH1, determines that the third performance indication is the fifth value, otherwise, the sixth value. Alternatively, it counts the number M₂ of second performance indications that are fourth values, and if M₂/M is less than or equal to the threshold T_TH, and M₂ is less than a threshold T_TH2, determines that the final model monitoring metric is the fifth value, otherwise, the sixth value. T_TH is obtained by receiving higher-layer and/or physical-layer signaling from the second communication node, or is determined by the first communication node itself.

Example 18: the threshold group includes a fifteenth threshold, and if a weighted sum of values of the M second performance indications is greater than or equal to the fifteenth threshold, the third performance indication is the fifth value. Alternatively, if the weighted sum of values of the M second performance indications is less than the fifteenth threshold, the third performance indication is the sixth value.

In some embodiments, one first channel quality information group corresponds to one measurement period, and in a process of calculating the weighted sum, an earlier measurement period corresponds to a greater weight.

Exemplarily, the first communication node obtains second performance indications y₁, y₂, ..., y_{M} of M samples, and assigns different weights to the model monitoring metric on different slots, the weights being w₁, w₂, ..., w_{N}, respectively, and calculates their weighted sum Z=y₁*w₁+y₂*w₂+, ..., +y_{N}*w_{N}. If Z is greater than a threshold T_TH3, it is determined that the third performance indication is the fifth value; otherwise, the sixth value, where wᵢ and wⱼ are values greater than or equal to 0, and preferably, wᵢ <= wⱼ, and 1 <= i < j <= N, that is, a weight corresponding to a sample in a latter slot is larger. T_TH3 is obtained by receiving higher-layer and/or physical layer signaling from the second communication node, or is determined according to the first communication node itself.

Example 19: the first communication node counts the number M₂ of second performance indications that are fourth values according to the obtained second performance indications y₁, y₂, ..., y_{M} of M samples, and if M₂ is less than or equal to a threshold T_TH2, determines that the final third performance indication is the fifth value, otherwise, the sixth value. A preferred example is that if the second performance indications of the subsequent continuous M-T_TH2 slots are all the fourth values, the third performance indication is determined as the fifth value, otherwise, the sixth value. T_TH2 is obtained by receiving higher-layer and/or physical-layer signaling from the second communication node, or is determined by the first communication node itself.

S103, the first communication node sends the performance indication.

In some embodiments, the second communication node may receive the performance indication, where the performance indication is determined according to one or more of the first performance indication, the second performance indication, and the third performance indication in the foregoing methods. Moreover, the performance of the current information processing mode, such as the performance of beam prediction on the first communication node side, is determined based on the performance indication. Furthermore, based on the performance of the beam prediction on the first communication node side, the second communication node may send a fourth indication to the first communication node. The fourth indication may be used to indicate whether the first communication node needs to update the information processing mode, for example, perform one or more of a deactivation operation, a switching operation, and a fallback operation for the beam prediction model, to improve the performance of beam prediction.

In some examples, the second communication node may, similar to the operation of the first communication node, determine the second performance indication according to the received N first performance indications, and determine whether to update the information processing mode according to the second performance indication. In some examples, the second communication node may, similar to the operation of the first communication node, determine the third performance indication according to the received multiple first performance indications or second performance indications, and determine whether to update the information processing mode according to the third performance indication.

In some embodiments, in a case of spatial beam prediction, the first communication node may send the first performance indication.

Furthermore, in a case where the first performance indication is the second value, the fourth indication may be used to indicate an update to the information processing mode, such as one or more of a deactivation operation, a switching operation, and a fallback operation for the beam prediction model. Alternatively, in a case where the first performance indication is the first value, the fourth indication may be used to indicate maintaining the current information processing mode, such as the current beam prediction model, that is, not performing a deactivation operation, a switching operation, or a fallback operation.

In some embodiments, in a case of temporal beam prediction, the first communication node may send the second performance indication or third performance indication.

Taking the second performance indication as an example, in a case where the second performance indication is the fourth value, the fourth indication may be used to indicate an update to the information processing mode, such as one or more of a deactivation operation, a switching operation, and a fallback operation for the beam prediction model. Alternatively, in a case where the second performance indication is the third value, the fourth indication may be used to indicate maintaining the current information processing mode, such as the current beam prediction model, that is, not performing a deactivation operation, a switching operation, or a fallback operation.

Based on the technical solutions provided in the embodiments of the present disclosure, different thresholds are configured based on beam prediction scenarios, to determine whether the current beam prediction related parameter is valid in the current usage scenario, i.e., the performance of the beam prediction, based on the thresholds and the first channel quality information obtained by performing beam prediction. So as to perform operations such as deactivation/switching/fallback for the beam prediction related parameter, in a case where the beam prediction is not adapted to the usage environment, thereby improving the performance of the beam prediction, thus further improving the accuracy of the beam prediction.

In some embodiments, the technical solutions of the present disclosure may also be applicable to monitor the validity of a functionality. The functionality here may be a method or operation for implementing an information processing, such as acquiring CSI, positioning, beam management, channel estimation, spectrum estimation, mobility speed estimation, and so on. A functionality may be implemented by one or more models.

In some embodiments, still taking the first communication node as a terminal and the second communication node as a base station as an example, the first communication node may send the first channel quality information and the second channel quality information to the second communication node, so that the second communication node may determine the performance indication according to the threshold group, the first channel quality information, and the second channel quality information.

Furthermore, the second communication node may also determine whether to perform one or more of a deactivation operation, a switching operation, and a fallback operation, based on the performance indication.

Exemplarily, the first communication node determines the performance or validity of the model in this instance, according to the content of the predicted second beam parameter information output by the model and the content of the second beam parameter information corresponding to the label. In an example, the first communication node may feed back all or some of the content of the predicted second beam parameter information (for example, the predicted beam parameter information corresponding to preferred K1 beams in each slot), and feed back all or some of the content of the second beam parameter information corresponding to the label (for example, the predicted beam parameter information corresponding to preferred K2 beams in each slot) to the second communication node. The second communication node receives all or some of the content of the predicted second beam parameter information and all or some of the content of the second beam parameter information corresponding to the label, fed back by the first communication node, to determine the performance or validity of the model in this instance.

In some embodiments, the second communication node may acquire the first channel quality information and the second channel quality information sent from the first communication node, and perform any one of the methods for determining the performance indication described in the step S102, which will not be repeated here.

In some embodiments, as shown in FIG. 3, the embodiments of the present disclosure also provide a performance indication receiving method, the method including:
S201, receiving, by a second communication node, a performance indication, where the performance indication is determined according to a threshold group, first channel quality information, and second channel quality information.

In some embodiments, the first channel quality information may be channel quality information obtained by the first communication node performing preliminary beam prediction based on a current beam prediction parameter. For example, in a case of performing beam prediction on the first communication node side, a prediction result output by a beam prediction model in the first communication node may be understood as the aforementioned first channel quality information.

In some embodiments, the second channel quality information may be a parameter of channel quality that is actually measured, acquired by the first communication node.

In some embodiments, in a case of spatial beam prediction, the performance indication includes a first performance indication, and the first performance indication may be determined based on the following manners.

In some embodiments, the threshold group includes at least one threshold, and the threshold may be determined based on the first channel quality information and/or the second channel quality information.

In some embodiments, the first channel quality information includes one first resource indicator, the second channel quality information includes L second resource indicators, and the threshold includes a first threshold. In response to a number of second resource indicators that are same as the first resource indicator among the L second resource indicators being greater than or equal to the first threshold, the first performance indication is a first value. Alternatively, in response to a number of second resource indicators that are same as the first resource indicator among the L second resource indicators being less than the first threshold, the first performance indication is a second value. Alternatively, in response to at least one difference among differences between the first resource indicator and the L second resource indicators being less than or equal to the first threshold, the first performance indication is a first value. Alternatively, in response to all differences between the first resource indicator and the L second resource indicators being greater than the first threshold, the first performance indication is a second value.

In some embodiments, the first channel quality information includes L first resource indicators, the second channel quality information includes one second resource indicator, and the threshold group includes a second threshold. In response to a number of first resource indicators that are same as the second resource indicator among the L first resource indicators being greater than or equal to the second threshold, the first performance indication is a first value. Alternatively, in response to a number of first resource indicators that are same as the second resource indicator among the L first resource indicators being less than the second threshold, the first performance indication is a second value.

In some embodiments, the first channel quality information includes L first channel quality parameters, the second channel quality information includes one second channel quality parameter, and the threshold group includes a third threshold. In response to an average value of differences between the L first channel quality parameters and the second channel quality parameter being less than the third threshold, the first performance indication is a first value. Alternatively, in response to an average value of differences between the L first channel quality parameters and the second channel quality parameter being greater than or equal to the third threshold, the first performance indication is a second value.

In some embodiments, the first channel quality information includes one first channel quality parameter, the second channel quality information includes L second channel quality parameters, and the threshold group includes a fourth threshold. In response to an average value of differences between the L second channel quality parameters and the first channel quality parameter being less than the fourth threshold, the first performance indication is a first value. Alternatively, in response to an average value of differences between the L second channel quality parameters and the first channel quality parameter being greater than or equal to the fourth threshold, the first performance indication is a second value.

In some embodiments, the first channel quality includes L probabilities, and the threshold group includes a fifth threshold. In response to a sum of P largest probabilities among the L probabilities being greater than or equal to the fifth threshold, the first performance indication is a first value, where P is a positive integer. Alternatively, in response to a sum of P largest probabilities among the L probabilities being less than the fifth threshold, the first performance indication is a second value.

In some embodiments, the first channel quality includes L first channel quality parameters, the second channel quality includes L second channel quality parameters, and the threshold group includes a sixth threshold. The first communication node determines multiple channel quality parameter differences between the L first channel quality parameters and the L second channel quality parameters, and determines an evaluation parameter. If the evaluation parameter is less than the sixth threshold, the first performance indication is the first value. Alternatively, if the evaluation parameter is greater than or equal to the sixth threshold, the first performance indication is the second value; where each channel quality parameter difference is an absolute value of a difference between one second channel quality parameter and a corresponding first channel quality parameter. Moreover, the evaluation parameter is a channel quality parameter difference corresponding to a preset cumulative distribution probability, in a cumulative distribution function (CDF) determined by multiple channel quality parameter differences.

In some embodiments, in a case of temporal beam prediction, the performance indication includes a second performance indication, and N first performance indications may be determined based on N pieces of first channel quality information and N pieces of second channel quality information, where the N first performance indications have a corresponding relationship with the N pieces of first channel quality information. Furthermore, the second performance indication is determined according to the N first performance indications.

In some embodiments, in a case of temporal beam prediction, the performance indication includes a third performance indication, and M second performance indications may be determined according to M first channel quality information groups and Q second channel quality information groups. Furthermore, the third performance indication is determined according to the M second performance indications.

For a detailed description of the step S201, reference may also be made to the relevant descriptions in the foregoing steps S101 to S103, which will not be repeated here.

The foregoing mainly introduces the solutions provided in the present disclosure from a perspective of interaction between various communication nodes. It may be understood that, to implement the above functions, each communication node includes corresponding hardware structures and/or software modules for performing each function. Those skilled in the art should easily realize that the present disclosure may be implemented in the form of hardware or a combination of hardware and computer software, in conjunction with algorithms and steps described in the embodiments disclosed in the present disclosure. Whether a certain function is performed by hardware or computer software driving hardware depends on the specific applications and design constraints of the technical solutions. Professional technicians may use different methods to implement the described functions, for each specific application, but such an implementation should not be considered beyond the scope of the present disclosure.

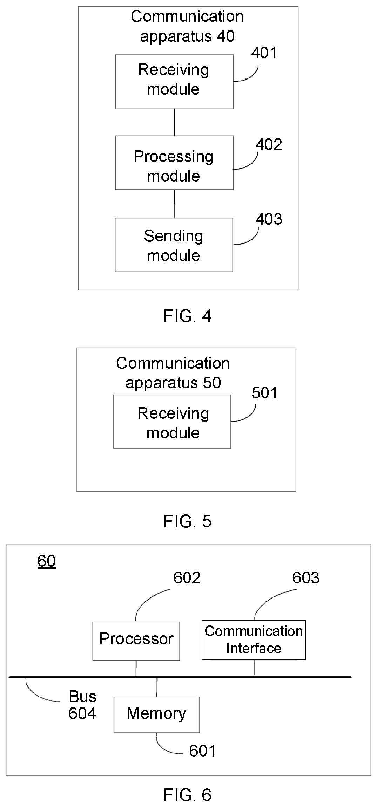

FIG. 4 shows a schematic diagram of components of a communication apparatus provided in the embodiments of the present disclosure. As shown in FIG. 4, the communication apparatus 40 includes a receiving module 401, a processing module 402, and a sending module 403.

In some embodiments, the receiving module 401 is configured to acquire first channel quality information and second channel quality information, and acquire a threshold group. The processing module 402 is configured to determine a performance indication based on the threshold group, the first channel quality information, and the second channel quality information. The sending module 403 is configured to send the performance indication.

In some embodiments, the receiving module 401 is configured to acquire N pieces of first channel quality information and N pieces of second channel quality information, where N is a positive integer. The processing module 402 is configured to determine the performance indication based on the threshold group, the N pieces of first channel quality information, and the N pieces of second channel quality information.

In some embodiments, the processing module 402 is configured to: determine N first performance indications based on the N pieces of first channel quality information and the N pieces of second channel quality information, where the N first performance indications have a corresponding relationship with the N pieces of first channel quality information; and determine a second performance indication according to the N first performance indications.

In some embodiments, the receiving module 401 is configured to acquire M first channel quality information groups and Q second channel quality information groups, where M and Q are positive integers. The processing module 402 is configured to determine a first performance indication based on the threshold group, the M first channel quality information groups, and the Q second channel quality information groups.

In some embodiments, the processing module 402 is configured to determine M second performance indications based on the M first channel quality information groups and the Q second channel quality information groups, where the M first channel quality information groups have a corresponding relationship with M third performance indications. The third performance metric is determined based on the M second performance indications.

For the more detailed description of the above receiving module 401, processing module 402, and sending module 403, more detailed description of each technical feature thereof, and description of beneficial effects, reference may be made to the corresponding method embodiment portions above, which will not be repeated here.

FIG. 5 shows a schematic diagram of components of a communication apparatus provided in the embodiments of the present disclosure. As shown in FIG. 5, the communication apparatus 50 includes a receiving module 501.

In some embodiments, the receiving module 501 is configured to receive a performance indication, where the performance indication is determined according to a threshold group, first channel quality information, and second channel quality information.

For the more detailed description of the above receiving module 501, more detailed description of each technical feature thereof, and description of beneficial effects, reference may be made to the corresponding method embodiment portions above, which will not be repeated here.

It should be noted that the modules in FIG. 4 or FIG. 5 may also be referred to as units, for example, the sending module may be referred to as a sending unit. In addition, in the embodiments shown in FIG. 4 or FIG. 5, the names of each module may also not be the names shown in the figures, for example, the sending module may also be referred to as a communication module, and the receiving module may also be referred to as a communication module.

If each unit or module in FIG. 4 or FIG. 5 is implemented in the form of a software function module and sold or used as an independent product, it may be stored in a computer-readable storage medium. Based on such an understanding, the technical solutions of the embodiments of the present disclosure, in essence, or some contributing to the prior art, or all or some of the technical solutions, may be embodied in the form of a software product, the computer software product is stored in a storage medium and includes several instructions for enabling a computer device (which may be a personal computer, a server, or a network device, etc.) or a processor to perform all or some of the steps of the methods in the embodiments of the present disclosure. The storage medium storing a computer software product includes various types of media capable of storing program codes, such as a USB flash drive, a mobile disk, a read-only memory (ROM), a random-access memory (RAM), a magnetic disk, or an optical disk, etc.

In a case where the functions of the above integrated modules are implemented in the form of hardware, the embodiments of the present disclosure provide a structural schematic diagram of a communication apparatus, where the communication apparatus may be the above communication apparatus 40 or communication apparatus 50. As shown in FIG. 6, the communication apparatus 60 includes: a memory 601, a processor 602, a communication interface 603, and a bus 604.

The memory 601 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

The processor 602 may be configured to implement or perform various exemplary logic blocks, modules, and circuits described in conjunction with the content of the present disclosure. The processor 602 may be a central processing unit, a general-purpose processor, a digital signal processor, an application specific integrated circuit, a field programmable gate array, another programmable logic device, a transistor logic device, a hardware component, or any combination thereof. The processor 602 may implement or perform various exemplary logic blocks, modules, and circuits described in conjunction with the content of the present disclosure. The processor 602 may also be a combination that implements computing functions, for example, including a combination of one or more microprocessors, a combination of a DSP and a microprocessor, and the like.

The communication interface 603 is configured to connect with other devices through a communication network. The communication network may be an Ethernet, a radio access network, a wireless local area network (WLAN), or the like.

In some embodiments, the memory 601 may be independent of the processor 602, and the memory 601 may be connected to the processor 602 via the bus 604, and is configured to store instructions or a program code. When the processor 602 invokes and executes the instructions or the program code stored in the memory 601, it can implement the determination method for the information processing mode provided in the embodiments of the present disclosure.

In some embodiments, the memory 601 may also be integrated with the processor 602.

The bus 604 may be an extended industry standard architecture (EISA) bus or the like. The bus 604 may be divided into an address bus, a data bus, a control bus, and the like. For ease of representation, only one thick solid line is used in FIG. 6 for representation, but this does not mean that there is only one bus or one type of bus.

From the description of the above implementations, those skilled in the art may clearly understand that, for convenience and brevity of description, an illustration is only provided by the division of functional modules mentioned above. In practical applications, the functions mentioned above may be allocated to be completed by different functional modules according to requirements. That is, the internal structure of the device or apparatus is divided into different functional modules to complete all or some of the functions mentioned above.

The embodiments of the present disclosure further provide a computer-readable storage medium. All or some of the processes in the above method embodiments may be completed by computer instructions indicating relevant hardware. The program may be stored in the above computer-readable storage medium. When the program is executed, it may include the processes of the above method embodiments. The computer-readable storage medium may be an internal storage unit of the device or apparatus provided in any of the foregoing embodiments, for example, a hard disk or an internal memory of a computer device. The above computer-readable storage medium may also be an external storage device of the above device or apparatus, for example, a plug-in hard disk, a smart media card (SMC), a secure digital (SD) card, a flash card, or the like equipped on the above device or apparatus. Furthermore, the above computer-readable storage medium may also include both the internal storage unit and the external storage device of the above device or apparatus. The above computer-readable storage medium is configured to store the above computer program and other programs and data required by the above device or apparatus. The above computer-readable storage medium may also be configured to temporarily store data that has been output or is to be output. The above computer-readable storage medium includes a non-transitory computer-readable storage medium.

The embodiments of the present disclosure further provide a computer program product. The computer program product includes a computer program. When the computer program product runs on a computer, it causes the computer to perform any of the methods provided in the above embodiments.

Although the present disclosure is described herein in conjunction with various embodiments, however, in the process of implementing the claimed present disclosure, those skilled in the art may understand and implement other variations of the disclosed embodiments by viewing the drawings, the disclosed content, and the appended claims. In the claims, the word "comprising" or its variations does not exclude other components or steps, and "a" or "an" does not exclude the case of multiple. A single processor or other unit may implement several functions listed in the claims. Some measures are recorded in dependent claims that are different from each other, but this does not mean that these measures cannot be combined to produce good effects.

Although the present disclosure is described in conjunction with specific features and their embodiments, it is obvious that various modifications and combinations may be made without departing from the spirit and scope of the present disclosure. Correspondingly, the specification and the drawings are merely exemplary illustrations of the present disclosure defined by the appended claims, and are considered to cover any of and all modifications, variations, combinations, or equivalents within the scope of the present disclosure. Obviously, those skilled in the art may make various changes and modifications to the present disclosure without departing from the spirit and scope of the present disclosure. Thus, if these modifications and variations of the present disclosure fall within the scope of the claims of the present disclosure and their equivalent technologies, the present disclosure is also intended to cover these modifications and variations.

The above description is only specific implementations of the present disclosure, but the protection scope of the present disclosure is not limited thereto. Any changes or substitutions within the technical scope disclosed by the present disclosure shall be covered within the protection scope of the present disclosure. Therefore, the protection scope of the present disclosure should be based on the protection scope of the claims.

## Claims

1. A performance indication sending method, **characterized by** comprising:
acquiring first channel quality information and second channel quality information;
acquiring a threshold group; determining a performance indication according to the threshold group, the first channel quality information, and the second channel quality information; and
sending the performance indication.

2. The method according to claim 1, wherein the threshold group is determined based on a type of channel quality information, wherein the threshold group comprises at least one threshold.

3. The method according to claim 2, wherein the type of the channel quality information comprises at least one of: one resource indicator, K resource indicators, one channel quality parameter, K channel quality parameters, a confidence level, a probability, a link performance parameter, a data drift value, wherein K is an integer greater than 1.

4. The method according to claim 1, wherein the first channel quality information comprises one first resource indicator, the second channel quality information comprises L second resource indicators, and the threshold group comprises a first threshold; wherein L is a positive integer; the performance indication comprises a first performance indication, and the first performance indication is determined based on any one of:
in response to a number of second resource indicators that are same as the first resource indicator among the L second resource indicators being greater than or equal to the first threshold, the first performance indication being a first value; or,
in response to a number of second resource indicators that are same as the first resource indicator among the L second resource indicators being less than the first threshold, the first performance indication being a second value; or,
in response to at least one difference among differences between the first resource indicator and the L second resource indicators being less than or equal to the first threshold, the first performance indication being a first value; or,
in response to all differences between the first resource indicator and the L second resource indicators being greater than the first threshold, the first performance indication being a second value.

5. The method according to claim 1, wherein the first channel quality information comprises L first resource indicators, the second channel quality information comprises one second resource indicator, and the threshold group comprises a second threshold; wherein L is a positive integer; the performance indication comprises a first performance indication, and the first performance indication is determined based on any one of:
in response to a number of first resource indicators that are same as the second resource indicator among the L first resource indicators being greater than or equal to the second threshold, the first performance indication being a first value; or,
in response to a number of first resource indicators that are same as the second resource indicator among the L first resource indicators being less than the second threshold, the first performance indication being a second value; or,
in response to at least one difference among differences between the second resource indicator and the L first resource indicators being less than or equal to the second threshold, the first performance indication being a first value; or,
in response to all differences between the second resource indicator and the L first resource indicators being greater than the second threshold, the first performance indication being a second value.

6. The method according to claim 1, wherein the first channel quality information comprises L first channel quality parameters, the second channel quality information comprises one second channel quality parameter, and the threshold group comprises a third threshold; wherein L is a positive integer; the performance indication comprises a first performance indication, and the first performance indication is determined based on any one of:
in response to an average value of differences between the L first channel quality parameters and the second channel quality parameter being less than the third threshold, the first performance indication being a first value; or,
in response to an average value of differences between the L first channel quality parameters and the second channel quality parameter being greater than or equal to the third threshold, the first performance indication being a second value; or,
in response to a weighted average of differences between the L first channel quality parameters and the second channel quality parameter being less than the third threshold, the first performance indication being a first value; or,
in response to a weighted average of differences between the L first channel quality parameters and the second channel quality parameter being greater than or equal to the third threshold, the first performance indication being a second value; or,
in response to a maximum value among differences between the L first channel quality parameters and the second channel quality parameter being less than the third threshold, the first performance indication being a first value; or,
in response to a maximum value among differences between the L first channel quality parameters and the second channel quality parameter being greater than or equal to the third threshold, the first performance indication being a second value; or,
in response to a minimum value among differences between the L first channel quality parameters and the second channel quality parameter being less than the third threshold, the first performance indication being a first value; or,
in response to a minimum value among differences between the L first channel quality parameters and the second channel quality parameter being greater than or equal to the third threshold, the first performance indication being a second value.

7. The method according to claim 1, wherein the first channel quality information comprises one first channel quality parameter, the second channel quality information comprises L second channel quality parameters, and the threshold group comprises a fourth threshold; wherein L is a positive integer; the performance indication comprises a first performance indication, and the first performance indication is determined based on any one of:
in response to an average value of differences between the L second channel quality parameters and the first channel quality parameter being less than the fourth threshold, the first performance indication being a first value; or,
in response to an average value of differences between the L second channel quality parameters and the first channel quality parameter being greater than or equal to the fourth threshold, the first performance indication being a second value; or,
in response to a weighted average of differences between the L second channel quality parameters and the first channel quality parameter being less than the fourth threshold, the first performance indication being a first value; or,
in response to a weighted average of differences between the L second channel quality parameters and the first channel quality parameter being greater than or equal to the fourth threshold, the first performance indication being a second value; or,
in response to a maximum value among differences between the L second channel quality parameters and the first channel quality parameter being less than the fourth threshold, the first performance indication being a first value; or,
in response to a maximum value among differences between the L second channel quality parameters and the first channel quality parameter being greater than or equal to the fourth threshold, the first performance indication being a second value; or,
in response to a minimum value among differences between the L second channel quality parameters and the first channel quality parameter being less than the fourth threshold, the first performance indication being a first value; or,
in response to a minimum value among differences between the L second channel quality parameters and the first channel quality parameter being greater than or equal to the fourth threshold, the first performance indication being a second value.

8. The method according to claim 1, wherein the first channel quality comprises L probabilities, and the threshold group comprises a fifth threshold; wherein L is a positive integer; the performance indication comprises a first performance indication, and the first performance indication is determined based on any one of:
in response to a sum of P largest probabilities among the L probabilities being greater than or equal to the fifth threshold, the first performance indication being a first value, wherein P is a positive integer; or,
in response to a sum of P largest probabilities among the L probabilities being less than the fifth threshold, the first performance indication being a second value.

9. The method according to claim 1, wherein the first channel quality information comprises L first channel quality parameters, the second channel quality information comprises L second channel quality parameters, and the threshold group comprises a sixth threshold; wherein L is a positive integer; the performance indication comprises a first performance indication, and the first performance indication is determined based on any one of:
in response to an evaluation parameter determined based on multiple channel quality parameter differences being less than the sixth threshold, the first performance indication being a first value; or,
in response to the evaluation parameter being greater than or equal to the sixth threshold, the first performance indication being a second value.

10. The method according to claim 1, wherein acquiring the first channel quality information and the second channel quality information, comprises:
acquiring N pieces of first channel quality information and N pieces of second channel quality information, wherein N is a positive integer;
determining the performance indication according to the threshold group, the first channel quality information, and the second channel quality information, comprises:
determining the performance indication according to the threshold group, the N pieces of first channel quality information, and the N pieces of second channel quality information.

11. The method according to claim 10, wherein the performance indication comprises a second performance indication, and determining the performance indication according to the threshold group, the N pieces of first channel quality information, and the N pieces of second channel quality information, comprises:
determining N first performance indications according to the N pieces of first channel quality information and the N pieces of second channel quality information; wherein the N first performance indications have a corresponding relationship with the N pieces of first channel quality information;
determining a second performance indication according to the N first performance indications.

12. The method according to claim 11, wherein the threshold comprises a seventh threshold; the second performance indication is determined based on any one of:
in response to a ratio of a number of first performance indications that are first values among the N first performance indications to N being greater than or equal to the seventh threshold, the second performance indication being a third value; or,
in response to a ratio of a number of first performance indications that are first values among the N first performance indications to N being less than the seventh threshold, the second performance indication being a fourth value; or,
in response to a ratio of a number of first performance indications that are second values among the N first performance indications to N being less than or equal to the seventh threshold, the second performance indication being a third value; or,
in response to a ratio of a number of first performance indications that are second values among the N first performance indications to N being greater than the seventh threshold, the second performance indication being a fourth value.

13. The method according to claim 11, wherein the threshold comprises an eighth threshold; and the second performance indication is determined based on any one of:
in response to a number of first performance indications that are first values among the N first performance indications being greater than or equal to the eighth threshold, the second performance indication being a third value; or,
in response to a number of first performance indications that are first values among the N first performance indications being less than the eighth threshold, the second performance indication being a fourth value; or,
in response to a number of first performance indications that are second values among the N first performance indications being less than or equal to the eighth threshold, the second performance indication being a third value; or,
in response to a number of first performance indications that are second values among the N first performance indications being greater than the eighth threshold, the second performance indication being a fourth value.

14. The method according to claim 11, wherein the threshold comprises a ninth threshold; and the second performance indication is determined based on any one of:
in response to a number of first performance indications that are first values continuously in time sequence among the N first performance indications being greater than or equal to the ninth threshold, the second performance indication being a third value; or,
in response to a number of first performance indications that are first values continuously in time sequence among the N first performance indications being less than the ninth threshold, the second performance indication being a fourth value; or,
in response to a number of first performance indications that are second values continuously in time sequence among the N first performance indications being less than or equal to the ninth threshold, the second performance indication being a third value; or,
in response to a number of first performance indications that are second values continuously in time sequence among the N first performance indications being greater than the ninth threshold, the second performance indication being a fourth value.

15. The method according to claim 11, wherein the threshold comprises a tenth threshold; and the second performance indication is determined based on any one of:
in response to a weighted sum of values of the N first performance indications being greater than or equal to the tenth threshold, the second performance indication being a third value; or,
in response to a weighted sum of values of the N first performance indications being less than the tenth threshold, the second performance indication being a fourth value.

16. The method according to claim 1, wherein acquiring the first channel quality information and the second channel quality information, comprises:
acquiring M first channel quality information groups and Q second channel quality information groups, wherein both M and Q are positive integers;
determining the performance indication according to the threshold group, the first channel quality information, and the second channel quality information, comprises:
determining the performance indication according to the threshold group, the M first channel quality information groups, and the Q second channel quality information groups.

17. The method according to claim 16, wherein the performance indication comprises a third performance indication; and determining the performance indication according to the threshold group, the M first channel quality information groups, and the Q second channel quality information groups, comprises:
determining M first performance indications or second performance indications according to the M first channel quality information groups and the Q second channel quality information groups; wherein the M first channel quality information groups have a corresponding relationship with the M first performance indications or second performance indications; and
determining the third performance indication according to the M first performance indications or second performance indications.

18. The method according to claim 17, wherein the threshold comprises an eleventh threshold; and the third performance indication is determined based on any one of:
in response to a ratio of a number of first performance indications that are first values among the M first performance indications or a number of second performance indications that are third values among the M second performance indications to M being greater than or equal to the eleventh threshold, the third performance indication being a fifth value; or,
in response to a ratio of a number of first performance indications that are first values among the M first performance indications or a number of second performance indications that are third values among the M second performance indications to M being less than the eleventh threshold, the third performance indication being a sixth value; or,
in response to a ratio of a number of first performance indications that are first values among the M first performance indications or a number of second performance indications that are third values among the M second performance indications to M being less than or equal to the eleventh threshold, the third performance indication being a fifth value; or,
in response to a ratio of a number of first performance indications that are first values among the M first performance indications or a number of second performance indications that are third values among the M second performance indications to M being greater than the eleventh threshold, the third performance indication being a sixth value.

19. The method according to claim 17, wherein the threshold group comprises a twelfth threshold; and the third performance indication is determined based on any one of:
in response to a number of first performance indications that are first values among the M first performance indications or a number of second performance indications that are third values among the M second performance indications being greater than or equal to the twelfth threshold, the third performance indication being a fifth value; or,
in response to a number of first performance indications that are first values among the M first performance indications or a number of second performance indications that are third values among the M second performance indications being less than the twelfth threshold, the third performance indication being a sixth value; or,
in response to a number of first performance indications that are second values among the M first performance indications or a number of second performance indications that are fourth values among the M second performance indications being less than or equal to the twelfth threshold, the third performance indication being a fifth value; or,
in response to a number of first performance indications that are second values among the M first performance indications or a number of second performance indications that are fourth values among the M second performance indications being greater than the twelfth threshold, the third performance indication being a sixth value.

20. The method according to claim 17, wherein the threshold group comprises a thirteenth threshold;
and the third performance indication is determined based on any one of:
in response to a number of first performance indications that are first values continuously in time sequence among the M first performance indications or a number of second performance indications that are third values continuously in time sequence among the M second performance indications being greater than or equal to the thirteenth threshold, the third performance indication being a fifth value; or,
in response to a number of first performance indications that are first values continuously in time sequence among the M first performance indications or a number of second performance indications that are third values continuously in time sequence among the M second performance indications being less than the thirteenth threshold, the third performance indication being a sixth value; or,
in response to a number of first performance indications that are second values continuously in time sequence among the M first performance indications or a number of second performance indications that are fourth values continuously in time sequence among the M second performance indications being less than or equal to the thirteenth threshold, the third performance indication being a fifth value; or,
in response to a number of first performance indications that are second values continuously in time sequence among the M first performance indications or a number of second performance indications that are fourth values continuously in time sequence among the M second performance indications being greater than the thirteenth threshold, the third performance indication being a sixth value.

21. The method according to claim 17, wherein the threshold group comprises a fourteenth threshold J, J is a positive integer; and the third performance indication is determined based on any one of:
in response to first J first performance indications among the M first performance indications in time sequence all being second values, and a number of first performance indications that are first values among other M-J first performance indications being greater than or equal to the fourteenth threshold, the third performance indication being a fifth value; or,
in response to first J first performance indications among the M first performance indications in time sequence all being second values, and a number of first performance indications that are first values among other M-J first performance indications being less than the fourteenth threshold, the third performance indication being a sixth value; or,
in response to first J first performance indications among the M first performance indications in time sequence all being second values, and a number of first performance indications that are second values among other M-J first performance indications being less than or equal to the fourteenth threshold, the third performance indication being a fifth value; or,
in response to first J first performance indications among the M first performance indications in time sequence all being second values, and a number of first performance indications that are second values among other M-J first performance indications being greater than the fourteenth threshold, the third performance indication being a sixth value; or,
in response to first J second performance indications among the M second performance indications in time sequence all being fourth values, and a number of second performance indications that are third values among other M-J second performance indications being greater than or equal to the fourteenth threshold, the third performance indication being a fifth value; or,
in response to first J second performance indications among the M second performance indications in time sequence all being fourth values, and a number of second performance indications that are third values among other M-J second performance indications being less than the fourteenth threshold, the third performance indication being a sixth value; or,
in response to first J second performance indications among the M second performance indications in time sequence all being fourth values, and a number of second performance indications that are fourth values among other M-J second performance indications being less than or equal to the fourteenth threshold, the third performance indication being a fifth value; or,
in response to first J second performance indications among the M second performance indications in time sequence all being fourth values, and a number of second performance indications that are fourth values among other M-J second performance indications being greater than the fourteenth threshold, the third performance indication being a sixth value.

22. The method according to claim 17, wherein the threshold group comprises a fifteenth threshold; and the third performance indication is determined based on any one of:
in response to a weighted sum of values of the M first performance indications or a weighted sum of values of the M second performance indications being greater than or equal to the fifteenth threshold, the third performance indication being a fifth value; or,
in response to a weighted sum of values of the M first performance indications or a weighted sum of values of the M second performance indications being less than the fifteenth threshold, the third performance indication being a sixth value.

23. The method according to claim 22, wherein one of first channel quality information groups corresponds to a group of measurement periods, and in a process of calculating the weighted sum, an earlier measurement period corresponds to a greater weight.

24. The method according to claim 1, wherein the first channel quality information comprises a link performance parameter, and the threshold group comprises a sixteenth threshold;
in response to the link performance parameter being greater than or equal to the sixteenth threshold, the first performance indication is a first value;
in response to the link performance parameter being less than the sixteenth threshold, the first performance indication is a second value.

25. The method according to claim 1, wherein the first channel quality information comprises a data drift value, and the threshold group comprises a seventeenth threshold;
in response to the data drift value being greater than or equal to the seventeenth threshold, the first performance indication is a first value;
in response to the data drift value being less than the seventeenth threshold, the first performance indication is a second value.

26. A performance indication receiving method, **characterized by** comprising:
receiving a performance indication, wherein the performance indication is determined according to a threshold group, first channel quality information, and second channel quality information.

27. A communication apparatus, **characterized by** comprising: a memory and a processor; wherein the memory and the processor are coupled; the memory is configured to store instructions executable by the processor; and the processor, upon executing the instructions, is configured to perform the method according to any one of claims 1 to 26.

28. A computer-readable storage medium, **characterized in that** the computer-readable storage medium stores computer instructions, and the computer instructions, when running on a communication apparatus, enable the communication apparatus to perform the method according to any one of claims 1 to 26.
